# EUROPEAN PATENT APPLICATION

(11) **EP 4 617 813 A1**
(43) Date of publication of application: **17.09.2025**
(21) Application number: 25156273.2
(22) Date of filing: 06.02.2025
(51) Int. Cl.: G05D 1/224, G05D 1/226, G05D 1/227, G05D 1/698, G06Q 10/04, H04W 4/00

(54) **INFORMATION PROCESSING METHOD, INFORMATION PROCESSING PROGRAM, AND INFORMATION PROCESSING APPARATUS**

(30) Priority: 13.03.2024 JP 2024039017; 17.12.2024 JP 2024220497
(71) Applicant: Panasonic Intellectual Property Management Co., Ltd., Kadoma-shi, Osaka 571-0057 (JP)
(72) Inventor: ARAI, Toshiya, Osaka, 571-8501 (JP); JOHN, Stephen William, Osaka, 571-8501 (JP); KUHARA, Shunsuke, Osaka, 571-8501 (JP)
(74) Representative: Eisenführ Speiser

(57) **Abstract**

An information processing method is performed by an information processing apparatus. The information processing method including receiving first information from a moving body, based on operation information regarding an operator who monitors the moving body.

## Description

### FIELD

A present disclosure relates to an information processing method, an information processing program, and an information processing apparatus.

### BACKGROUND

In recent years, for example, conveyance based on an autonomously movable moving body, such as an autonomous driving vehicle, has been automatized. According to such an autonomous driving technique, a situation difficult to handle automatically occurs at a constant rate. Thus, required has been a technique for preventing, due to remote monitoring and operation by an operator, services from being interrupted. For example, JP 6566995 B2 discloses a technique to remotely monitor a moving body in consideration of safety.

According to such a conventional technique, in order to remotely monitor or remotely operate many moving bodies as management targets, from each of the moving bodies as management targets to a server, information including a captured picture captured by the corresponding moving body is uploaded, followed by distribution of the information to an operator terminal. An operator has difficulty in monitoring the captured pictures from all the moving bodies. According to the conventional technique, excessive information, such as excessive captured pictures, is uploaded from the moving bodies. That is, according to the conventional technique, a communication traffic volume may be enormous.

### SUMMARY

The present disclosure is made in view of the above, and has an object to provide an information processing method, an information processing program, and an information processing apparatus that can reduce the communication traffic volume.

An information processing method according to an embodiment is performed by an information processing apparatus. The information processing method including receiving first information from a moving body, based on operation information regarding an operator who monitors the moving body.

### BRIEF DESCRIPTION OF THE DRAWINGS

FIG. 1 is an explanatory diagram for an example of an information processing system;
FIG. 2 is a functional block diagram of an example of the information processing system;
FIG. 3 is a schematic table of an example of the data configuration of a handling management DB;
FIG. 4A is a schematic table of an example of the data configuration of an upload necessity/unnecessity list;
FIG. 4B is a schematic table of an example of the data configuration of the upload necessity/unnecessity list;
FIG. 4C is a schematic table of an example of the data configuration of the upload necessity/unnecessity list;
FIG. 5A is a schematic view of an example of a display screen;
FIG. 5B is a schematic view of an example of the display screen;
FIG. 6 is a sequence diagram illustrating an exemplary flow of information processing to be performed in the information processing system;
FIG. 7 is a flowchart illustrating an exemplary flow of information processing to be performed by a moving body;
FIG. 8 is a flowchart illustrating an exemplary flow of information processing to be performed by an information processing apparatus;
FIG. 9 is a flowchart of exemplary determination processing for upload necessity/unnecessity;
FIG. 10 is a schematic table of an example of the data configuration of the handling management DB; and
FIG. 11 is a hardware configuration diagram.

### DETAILED DESCRIPTION

Embodiments of an information processing method, an information processing program, and an information processing apparatus will be described in detail below with reference to the drawings.

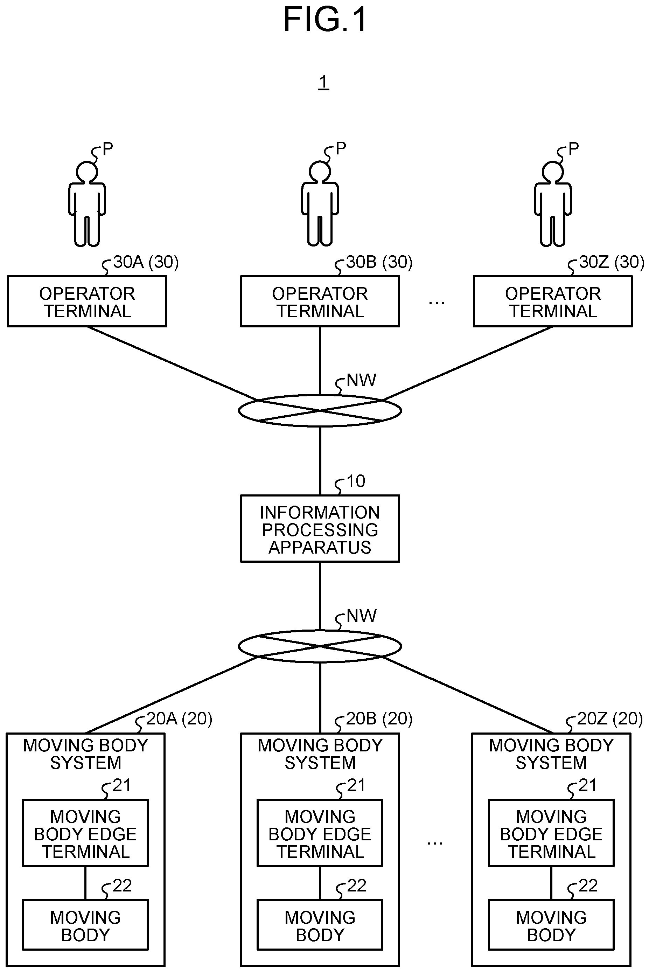

FIG. 1 is an explanatory diagram for an example of an information processing system 1 according to the present embodiment.

The information processing system 1 includes an information processing apparatus 10, a plurality of moving body systems 20, and a plurality of operator terminals 30. The moving body systems 20 and the information processing apparatus 10 are communicably connected, for example, through a network NW. The information processing apparatus 10 and the operator terminals 30 are communicably connected, for example, through a network NW.

The network NW through which the information processing apparatus 10 and the moving body systems 20 are communicably connected and the network NW through which the information processing apparatus 10 and the operator terminals 30 are communicably connected may be identical to each other or different from each other.

The information processing apparatus 10 serves as an information processing apparatus that manages a moving body 22 included in each of the moving body systems 20 and the operator terminals 30. The information processing apparatus 10 is a dedicated or general-purpose computer.

The moving body systems 20 each include a moving body edge terminal 21 and a moving body 22. The moving body systems 20 each include a single moving body edge terminal 21 and a single moving body 22. Each moving body edge terminal 21 and the corresponding moving body 22 are communicably connected.

The moving bodies 22 are each a target to be remotely operated or remotely monitored by an operator P and are each autonomously movable. Examples of such a moving body include a vehicle that moves autonomously, a robot that has a movement function and moves autonomously, and an automatic guided vehicle (AGV). The vehicle that moves autonomously may be referred to as an autonomous driving vehicle. In the present embodiment, description will be given with an exemplary mode in which each moving body 22 serves as an autonomously movable vehicle.

The moving body edge terminals 21 each serve as an information processing apparatus that performs, for example, communication control to information regarding the moving body 22 in communication with the information processing apparatus 10. In the present embodiment, description will be given with an exemplary mode in which each moving body edge terminal 21 and the corresponding moving body 22 are separate from each other. However, each moving body edge terminal 21 and the corresponding moving body 22 may be integrated together.

The information processing system 1 includes a plurality of moving body systems 20. Referring to FIG. 1, as an example, the information processing system 1 includes Z number of moving body systems 20, namely, moving body systems 20A to 20Z. That is, the information processing system 1 includes Z number of moving bodies 22. Z is an integer of two or more.

The operator terminals 30 each serve as an information processing apparatus for remotely monitoring or remotely operating a moving body 22. The operator terminals 30 are each operated by an operator P in charge of remotely monitoring or remotely operating a moving body 22. The information processing system 1 includes a single operator terminal 30 or a plurality of operator terminals 30. Referring to FIG. 1, as an example, Z number of operator terminals 30, namely, operator terminals 30A to 30Z are illustrated. Z is an integer of two or more. As described above, the information processing system 1 may include a single operator terminal 30.

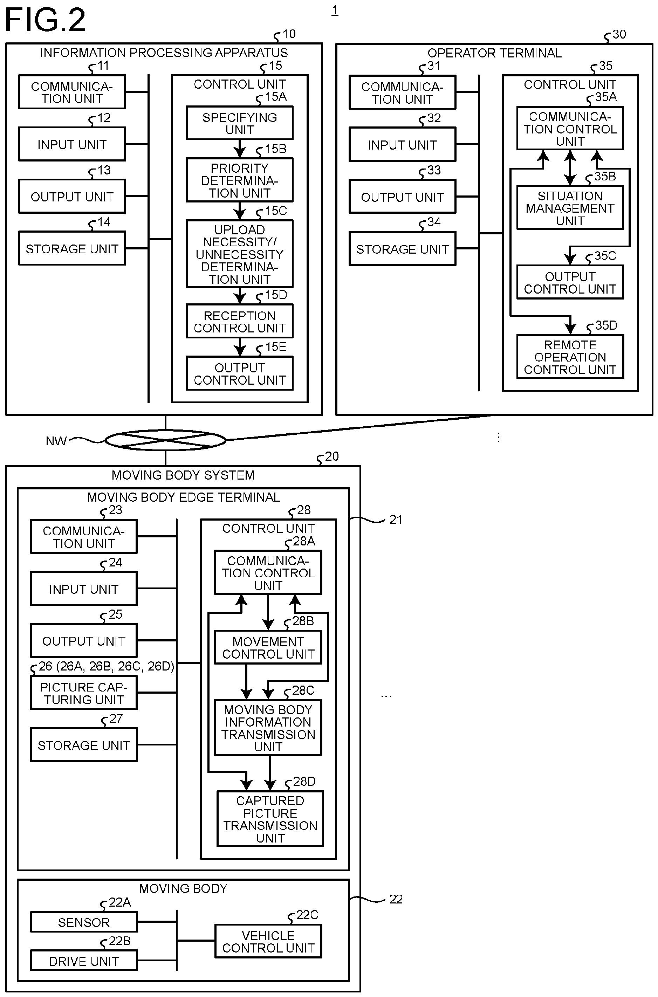

FIG. 2 is a functional block diagram of an example of the information processing system 1 according to the present embodiment.

A moving body system 20 includes a moving body edge terminal 21 and a moving body 22. The moving body edge terminal 21 and the moving body 22 are communicably connected. As described above, the moving body system 20 includes a single moving body edge terminal 21 and a single moving body 22. In the present embodiment, description will be given with an estimated mode in which a moving body system 20 includes a single pair of a single moving body edge terminal 21 and a single moving body 22.

The moving body 22 includes a sensor 22A, a drive unit 22B, and a vehicle control unit 22C. The sensor 22A, the drive unit 22B, and the vehicle control unit 22C are communicably connected, for example, through a bus.

The sensor 22A serves as a sensor that detects the state of the moving body 22. The sensor 22A includes, for example, an internal sensor and an external sensor.

The internal sensor serves as a sensor that obtains observation information on the internal state of the moving body 22. The observation information is information on, for example, the position, velocity, acceleration, steering angle, steering direction, accelerator pedal angle, and vibrations of the moving body 22. Specifically, the internal sensor includes a position sensor (global navigation satellite system (GNSS) and global positioning system (GPS)). In addition, the internal sensor includes, for example, an inertial measurement unit (IMU), an acceleration sensor, a velocity sensor, an angular velocity sensor such as a gyro sensor, a rotary encoder, a steering angle sensor, a steering direction sensor, an accelerator pedal angle sensor, and a vibration sensor. The internal sensor further includes a sensor that detects mode information indicating whether or not the moving body 22 is autonomously traveling and a sensor that detects whether or not the moving body 22 remains stopped.

The external sensor serves as a sensor that obtains distance information. The distance information is information indicating the distance from the moving body 22 to an object around the moving body 22.

The external sensor is, for example, a distance sensor. The distance sensor is, for example, a millimeter-wave radar, a laser sensor, or a distance image sensor. The laser sensor is, for example, a two-dimensional laser imaging detection and ranging (LiDAR) sensor installed parallel to a horizontal plane or a three-dimensional LiDAR sensor.

The sensor 22A sequentially detects the state of the moving body 22 on a time-series basis and sequentially outputs a result of detection to a control unit 28.

The drive unit 22B serves as a dedicated controller for a device that is mounted on the moving body 22 and performs driving related to traveling of the moving body 22. The drive unit 22B is, for example, an electronic control unit (ECU) that controls, for example, an engine or a motor driver that controls a motor. Under control of the vehicle control unit 22C, the drive unit 22B controls the driving of the device.

The vehicle control unit 22C controls each unit of the moving body 22. For example, based on a traveling instruction signal received from the information processing apparatus 10 through the moving body edge terminal 21, the vehicle control unit 22C controls the drive unit 22B to move the moving body 22 autonomously. Note that, based on a traveling instruction signal received from the information processing apparatus 10 without the moving body edge terminal 21, the vehicle control unit 22C may control the drive unit 22B to move the moving body 22 autonomously. In addition, the vehicle control unit 22C determines the situation around the moving body 22, for example, based on a result of detection from the sensor 22A, and controls the level of acceleration, the level of braking, or the steering angle to control the drive unit 22B to move the moving body 22 autonomously.

In addition, based on remote operation instruction information received from an operator terminal 30 through the moving body edge terminal 21 and the information processing apparatus 10, the vehicle control unit 22C performs remote operation traveling. The remote operation traveling means traveling corresponding to a remote operation by the operator terminal 30. Note that the vehicle control unit 22C may receive remote operation instruction information from the operator terminal 30 through the information processing apparatus 10 without the moving body edge terminal 21. At the time of remote operation traveling, based on the remote operation instruction information received from the operator terminal 30, the vehicle control unit 22C controls the level of acceleration, the level of braking, or the steering angle to control the drive unit 22B such that the moving body 22 travels in accordance with an operation instruction from the operator terminal 30.

The moving body edge terminal 21 includes a communication unit 23, an input unit 24, an output unit 25, a picture capturing unit 26, a storage unit 27, and a control unit 28. The communication unit 23, the input unit 24, the output unit 25, the picture capturing unit 26, and the storage unit 27 are communicably connected to the control unit 28, for example, through a bus.

The communication unit 23 communicates with the information processing apparatus 10, for example, through a network NW. In addition, the communication unit 23 communicates with the moving body 22 through the network NW or directly. The input unit 24 receives various types of operations from a user. The output unit 25 outputs various types of information. The output unit 25 includes, for example, a display that displays various types of information and a speaker that outputs various types of sound.

The picture capturing unit 26 serves as a camera that captures the periphery of the moving body 22 to obtain captured picture data. The captured picture data will be described as a captured picture. For example, the moving body 22 may be provided with a plurality of picture capturing units 26 (e.g., picture capturing units 26A to 26D) mutually different in capturing direction.

The storage unit 27 stores various types of data. The storage unit 27 is, for example, a semiconductor memory element, such as a RAM or a flash memory, a hard disk, or an optical disc. Note that the storage unit 27 may be a storage device provided outside the moving body edge terminal 21. Alternatively, the storage unit 27 may be a storage medium storing or temporarily storing a program or various types of information by downloading through a local area network (LAN) or the Internet.

The control unit 28 serves as a computer that performs information processing in the moving body edge terminal 21.

The control unit 28 includes a communication control unit 28A, a movement control unit 28B, a moving body information transmission unit 28C, and a captured picture transmission unit 28D. The communication control unit 28A, the movement control unit 28B, the moving body information transmission unit 28C, and the captured picture transmission unit 28D are achieved by a single processor or a plurality of processors. For example, the above each unit may be achieved by causing a processor such as a central processing unit (CPU) to execute a program, namely, by software.

The above each unit may be achieved by a processor such as a dedicated IC, namely, by hardware. The above each unit may be achieved by software and hardware in combination. In a case where a plurality of processors is used, each processor may achieve one unit in the units or two or more units in the units.

The communication control unit 28A controls communication with the information processing apparatus 10.

For example, based on a traveling instruction signal received from the information processing apparatus 10, the movement control unit 28B controls the drive unit 22B through the vehicle control unit 22C to move the moving body 22 autonomously. For example, the movement control unit 28B outputs, to the moving body 22, the traveling instruction signal received from the information processing apparatus 10. Based on the traveling instruction signal received from the moving body edge terminal 21, the vehicle control unit 22C of the moving body 22 controls the drive unit 22B to move the moving body 22 autonomously.

In addition, based on remote operation instruction information received from the operator terminal 30 through the information processing apparatus 10, the movement control unit 28B causes the moving body 22 to perform remote operation traveling. In detail, the movement control unit 28B outputs, to the vehicle control unit 22C of the moving body 22, the remote operation instruction information received from the operator terminal 30.

The moving body information transmission unit 28C transmits moving body information to the information processing apparatus 10 through the communication control unit 28A and the communication unit 23.

The moving body information is information regarding the traveling environment of the moving body 22. The moving body information includes, for example, a result of detection from the sensor 22A and a result of analysis of a captured picture captured by the picture capturing unit 26. As described above, the result of detection from the sensor 22A includes, for example, the position, velocity, acceleration, steering angle, steering direction, distance to an ambient object, accelerator pedal angle, vibrations of the moving body 22, mode information indicating whether or not the moving body 22 is autonomously traveling, and information indicating whether or not the moving body 22 remains stopped. The moving body information transmission unit 28C analyzes the captured picture obtained by the picture capturing unit 26 using a publicly known image processing method to derive a result of analysis. The result of analysis includes information regarding the environment around the moving body system 20. The moving body information transmission unit 28C transmits, to the information processing apparatus 10, the moving body information including the result of detection from the sensor 22A and the result of analysis of the captured picture.

Based on upload necessity/unnecessity information received from the information processing apparatus 10 through the communication control unit 28A and the communication unit 23, the captured picture transmission unit 28D starts to transmit, to the information processing apparatus 10, first information including the captured picture captured by the picture capturing unit 26.

In detail, in a case where the upload necessity/unnecessity information indicates upload necessity, the captured picture transmission unit 28D starts to transmit, to the information processing apparatus 10, the first information including the captured picture captured by the picture capturing unit 26. In addition, the upload necessity/unnecessity information may include a result of determination of upload necessity/unnecessity for each of the camera IDs of picture capturing units 26. Such a camera ID is identification information on a picture capturing unit 26. In this case, the captured picture transmission unit 28D starts to transmit, to the information processing apparatus 10, the first information including the captured picture captured by the picture capturing unit 26 identified by a camera ID determined as upload necessity.

In a case where the upload necessity/unnecessity information indicates upload unnecessity, the captured picture transmission unit 28D terminates the transmission of the first information including the captured picture captured by the picture capturing unit 26 to the information processing apparatus 10, keeps, in a case where the transmission has been completed, the state, or transmits, to the information processing apparatus 10, the captured picture at a minimized transmission quantity. The minimized transmission quantity is a transmission quantity that is less than the transmission quantity of the first information per unit time for transmission in a case where the upload necessity/unnecessity information indicates upload necessity and is less than a previously determined threshold. The captured picture transmission unit 28D is required to perform adjustment to the minimized transmission quantity by processing such as a reduction in the rate of coding of the captured picture or a reduction in the number of communication lines in a case where a plurality of lines such as bonding is used. In addition, in a case where the upload necessity/unnecessity information indicates upload unnecessity, the captured picture transmission unit 28D may only store the first information including the captured picture into the storage unit 27 without transmitting the first information to the information processing apparatus 10.

The captured picture transmission unit 28D may receive, from the information processing apparatus 10, picture saving necessity/unnecessity information indicating captured picture saving necessity/unnecessity. In this case, the captured picture transmission unit 28D stores the captured picture captured by the picture capturing unit 26 into the storage unit 27 in a case where the picture saving necessity/unnecessity information indicates picture saving necessity. At the time of storage of the captured picture into the storage unit 27, the captured picture transmission unit 28D may perform previously determined various types of processing, such as a reduction in resolution and an adjustment in frame rate, to the captured picture to store the processed captured picture into the storage unit 27. In a case where the picture saving necessity/unnecessity information indicates picture saving unnecessity, the captured picture transmission unit 28D performs no storage of the captured picture captured by the picture capturing unit 26 into the storage unit 27.

Next, an operator terminal 30 will be described.

The operator terminal 30 includes a communication unit 31, an input unit 32, an output unit 33, a storage unit 34, and a control unit 35. The communication unit 31, the input unit 32, the output unit 33, and the storage unit 34 are communicably connected to the control unit 35, for example, through a bus.

The communication unit 31 communicates with the information processing apparatus 10, for example, through a network NW. The input unit 32 receives various types of operations from an operator P. The output unit 33 outputs various types of information. The output unit 33 includes, for example, a display that displays various types of information and a speaker that outputs various types of sound.

The storage unit 34 stores various types of data. The storage unit 34 is, for example, a semiconductor memory element, such as a RAM or a flash memory, a hard disk, or an optical disc. Note that the storage unit 34 may be a storage device provided outside the operator terminal 30. In addition, the storage unit 34 may be a storage medium storing or temporarily storing a program or various types of information by downloading through a LAN or the Internet.

The control unit 35 serves as a computer that performs information processing in the operator terminal 30.

The control unit 35 includes a communication control unit 35A, a situation management unit 35B, an output control unit 35C, and a remote operation control unit 35D. The communication control unit 35A, the situation management unit 35B, the output control unit 35C, and the remote operation control unit 35D are achieved by a single processor or a plurality of processors. For example, the above each unit may be achieved by causing a processor, such as a CPU, to execute a program, namely, by software.

The above each unit may be achieved by a processor such as a dedicated IC, namely, by hardware. The above each unit may be achieved by software and hardware in combination. In a case where a plurality of processors is used, each processor may achieve one unit in the units or two or more units in the units.

In addition, at least one of the above units included in the control unit 35 may be mounted on an external information processing apparatus communicably connected to the operator terminal 30, for example, through a network NW.

The communication control unit 35A controls communication with the information processing apparatus 10.

The situation management unit 35B manages the situation of the operator P who uses the operator terminal 30. In detail, the situation management unit 35B generates situation information on the operator P and then transmits the situation information to the information processing apparatus 10.

The situation information is information indicating the situation of the operator P. The situation information includes at least either handling situation information indicating the handling situation of a remote task to a moving body 22 by the operator P or processing situation information indicating the processing situation of the remote task by the operator P.

The handling situation information is information indicating the handling situation of the remote task to the moving body 22 by the operator P. The remote task is also referred to as a task. Specifically, the handling situation information is indicated, for example, with any of "in operation", "interruption", "not yet", and "completion" for the remote task.

The processing situation information is information indicating the processing situation of the remote task to the moving body 22 by the operator P. The processing situation information is indicated, for example, with at least one of "on standby for the remote task", "in assisted operation" indicating in assistive remote operation, "in remote operation" indicating in remote operation, "remote monitoring interruption" indicating the interruption of the remote operation or monitoring, and the number of requested remote tasks to the operator P.

The situation management unit 35B analyzes the situation information on the operator P, for example, using information stored in the storage unit 27 and an operation instruction signal input due to an operation on the input unit 32 by the operator P. Then, the situation management unit 35B transmits, to the information processing apparatus 10, the situation information on the operator P obtained by the analysis.

The output control unit 35C outputs, to the output unit 33, the first information received from the information processing apparatus 10 through the communication control unit 35A and the communication unit 31. Details of the first information will be described later. For example, the output control unit 35C displays, on the display of the output unit 33, the first information received from the information processing apparatus 10. In a case where the first information includes the captured picture of the moving body 22, the output control unit 35C displays, on the output unit 33, the captured picture of the moving body 22. The captured picture from the moving body 22 is the captured picture of the periphery of the moving body 22 captured by the picture capturing unit 26 that is included in the moving body edge terminal 21 communicably connected to the moving body 22 and captures the periphery of the moving body 22. The operator P visually verifies the first information including the captured picture displayed on the output unit 33 to monitor and remotely operate the moving body 22.

The remote operation control unit 35D remotely controls the moving body 22 in response to an operation on the input unit 32 by the operator P. For example, the remote operation control unit 35D transmits, to the information processing apparatus 10, remote operation instruction information corresponding to an operation instruction to the moving body 22 input in response to an operation on the input unit 32 by the operator P, together with the moving body identification (ID) of the moving body 22. The moving body ID is identification information on the moving body 22. The information processing apparatus 10 transmits the remote operation instruction information to the moving body 22 identified by its moving body ID. Based on the remote operation instruction information, the vehicle control unit 22C of the moving body 22 controls the drive unit 22B to move the moving body 22 in accordance with the remote operation by the operator P. Thus, the moving body 22 is remotely operated by the operator P who operates the operator terminal 30.

Next, the information processing apparatus 10 will be described.

The information processing apparatus 10 includes a communication unit 11, an input unit 12, an output unit 13, a storage unit 14, and a control unit 15. The communication unit 11, the input unit 12, the output unit 13, and the storage unit 14 are communicably connected to the control unit 15, for example, through a bus.

The communication unit 11 performs communication between the information processing apparatus 10 and a moving body system 20, for example, through a network NW. The input unit 12 receives various types of operations from a user. The output unit 13 outputs various types of information. The output unit 13 includes, for example, a display that displays various types of information and a speaker that outputs various types of sound.

The storage unit 14 stores various types of data. The storage unit 14 is, for example, a semiconductor memory element, such as a RAM or a flash memory, a hard disk, or an optical disc. Note that the storage unit 14 may be a storage device provided outside the information processing apparatus 10. In addition, the storage unit 14 may be a storage medium storing or temporarily storing a program or various types of information by downloading through a LAN or the Internet.

The control unit 15 serves as a computer that performs information processing in the information processing apparatus 10.

The control unit 15 includes a specifying unit 15A, a priority determination unit 15B, an upload necessity/unnecessity determination unit 15C, a reception control unit 15D, and an output control unit 15E. The specifying unit 15A, the priority determination unit 15B, the upload necessity/unnecessity determination unit 15C, the reception control unit 15D, and the output control unit 15E are achieved by a single processor or a plurality of processors. For example, the above each unit may be achieved by causing a processor, such as a CPU, to execute a program, namely, by software.

The above each unit may be achieved by a processor such as a dedicated IC, namely, by hardware. The above each unit may be achieved by software and hardware in combination. In a case where a plurality of processors is used, each processor may achieve one unit in the units or two or more units in the units. In addition, at least one of the above units included in the information processing apparatus 10 may be mounted on an external information processing apparatus communicably connected to the information processing apparatus 10, for example, through a network NW.

The specifying unit 15A specifies operation information, based on the moving body information.

The operation information is information regarding the operator P who remotely monitors or remotely operates the moving body 22. In detail, the operation information is information regarding the necessity of operation to the moving body 22 by the operator P. In the present embodiment, the operation means remote operation and remote monitoring by the operator P. The operation information is, for example, information indicating the necessity of any of a remote operation request, a remote assist request, and a remote monitoring request.

The remote operation request is information indicating the necessity of remote operation of the moving body 22 by the operator P. The remote assist request is information indicating the necessity of assistive remote operation of the moving body 22 by the operator P. The assistive remote operation means that the moving body 22 autonomously performs processing regarding partial movement and performs processing regarding partial movement in accordance with a remote operation instruction from the operator P. The remote monitoring request is information indicating the necessity of monitoring of the moving body 22 by the operator P.

Using the moving body information received from each of the respective moving body edge terminals 21 connected to a plurality of moving bodies 22 as management targets in the information processing system 1, the specifying unit 15A specifies the operation information per moving body 22.

For example, the specifying unit 15A analyzes, using a publicly known method, the result of detection from the sensor 22A and the captured picture included in the moving body information to derive the operation information indicating the necessity of operation of the moving body 22 by the operator P for the moving body 22 included in the moving body system 20 that is the sender of the moving body information.

In detail, for example, using the result of analysis of the captured picture captured by the picture capturing unit 26 included in the moving body information, the specifying unit 15A specifies the operation information corresponding to the degree of necessity of operation by the operator P.

The specifying unit 15A specifies the operation information in descending order of necessity of operation by the operator P, for example, in the order of the remote operation request, the remote assist request, and the remote monitoring request. In addition, in a case where the current position of the moving body 22 corresponds to a location around a particular intersection in the real space, the specifying unit 15A specifies the remote assist request as the operation information.

The specifying unit 15A may specify the operation information indicating any of the remote operation request, the remote assist request, and the remote monitoring request, per moving body 22 using at least one of the vehicle type, traveling speed, vehicle size, turning performance, and safety performance of the moving body 22 included in the moving body information. For example, the specifying unit 15A stores in advance the operation information indicating any of the remote operation request, the remote assist request, and the remote monitoring request, in association with each combination of the values of the items of the vehicle type, traveling speed, vehicle size, turning performance, and safety performance of the moving body 22. Specifically, for example, the specifying unit 15A stores in advance, into the storage unit 14, the operation information in which the priority, described later, ascends as the performance, such as the turning performance and the safety performance, indicated by the combination decreases, in association with each combination. Then, the specifying unit 15A may read, from the storage unit 14, the operation information corresponding to a combination of the values of the items included in the moving body information and then specify the operation information.

Based on the handling situation information on the remote task to the moving body 22 by the operator P in the past, the specifying unit 15A may specify the operation information to the moving body 22. As described above, the handling situation information is information indicated with any of "in operation", "interruption", "not yet", and "completion". For example, in a case where the moving body 22 is located at a spot that is the past location of the moving body 22 with the remote task corresponding to monitoring and the handling situation information indicating "in operation", namely, the location of remote monitoring by the operator P in the past, the specifying unit 15A specifies, as the operation information, the remote monitoring request for remote monitoring as the remote task.

Based on the operation information, the priority determination unit 15B determines priority per moving body 22.

In detail, the order of priority corresponding to the degrees of emergency and importance of operation to the moving body 22 by the operator P is set in advance in the operation information. In detail, the order of priority is set in advance such that the priority descends in the order of the remote operation request, the remote assist request, and the remote monitoring request.

Thus, the priority determination unit 15B reads, as priority, the order of priority corresponding to the operation information specified per moving body 22 to determine the priority corresponding to the operation information.

Based on the operation information and the handling situation information on the remote task of the operator P to the moving body 22, the priority determination unit 15B may determine priority per moving body 22.

As described above, the handling situation information is information indicating any of "in operation", "interruption", "not yet", and "completion". The priority determination unit 15B reads the operation information specified by the specifying unit 15A and the handling situation information included in the situation information received from the operator terminal 30 to specify the handling situation information on the remote task to the moving body 22 by the operator P. The order of priority is set in advance in the handling situation information such that the priority descends in the order of "in operation", "interruption", "not yet", and "completion".

Then, the priority determination unit 15B determines priority per moving body 22 based on the operation information specified to the corresponding moving body 22 by the specifying unit 15A and the handling situation information on the operator P to the moving body 22.

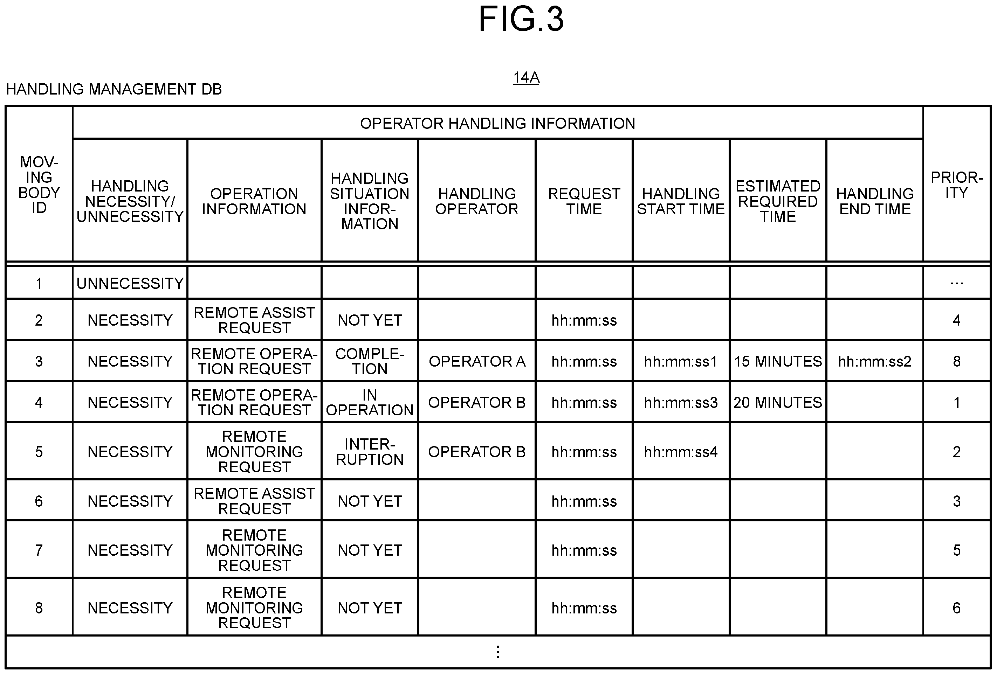

Description will be given with FIG. 3. FIG. 3 is a schematic table of an example of the data configuration of a handling management DB 14A. The handling management DB 14A is information with which the priority determination unit 15B calculates priority and is stored in the storage unit 14. The handling management DB 14A is, for example, a database in which moving body ID, operator handling information, and priority are associated together. The data format of the handling management DB 14A is not limited to the database.

Such moving body ID is identification information on a moving body 22. The operator handling information includes handling necessity/unnecessity, operation information, handling situation information, handling operator, request time, handling start time, estimated required time, and handling end time.

Every time the situation information is received from an operator terminal 30, the priority determination unit 15B registers, in the handling management DB 14A, the handling situation information to a moving body 22 and operator identification information on the operator P who operates the operator terminal 30, included in the situation information, in association with the moving body ID of the moving body 22. In addition, the priority determination unit 15B registers, in the handling management DB 14A, the operation information specified per moving body 22 by the specifying unit 15A, in association with the moving body ID of the corresponding moving body 22.

In addition, the priority determination unit 15B calculates, from the operation information, estimated required time for a handling by the operator P and then registers the estimated required time in the handling management DB 14A. For example, the estimated value of required time is registered in advance per piece of operation information, and the priority determination unit 15B reads the estimated value corresponding to the operation information to calculate the estimated required time.

The priority determination unit 15B may adjust the estimated required time calculated from the operation information, using at least one of the situation of the moving body 22 indicated by the result of detection from the sensor 22A, the current position of the moving body 22 indicated by the result of detection, the current time, the operational schedule of the moving body 22, and the limited speed at the current position of the moving body 22 included in the moving body information. The priority determination unit 15B may adjust the estimated required time calculated from the operation information, using at least one of the vehicle type, traveling speed, vehicle size, turning performance, and safety performance of the moving body 22 included in the moving body information.

Then, the priority determination unit 15B sets "necessity" indicating handling necessity into the section of handling necessity/unnecessity corresponding to the moving body ID to which the operation information is registered. In addition, the priority determination unit 15B sets "unnecessity" indicating handling unnecessity into the section of handling necessity/unnecessity corresponding to the moving body ID to which no operation information is registered.

The priority determination unit 15B registers, in the handling management DB 14A, the received time from the moving body system 20 corresponding to the moving body information used by the specifying unit 15A for the specification of the operation information indicating any of the remote operation request, the remote assist request, and the remote monitoring request, as the request time from the moving body 22 included in the moving body system 20, in association with the moving body ID of the moving body 22.

As described above, the order of priority is set in advance in the handling situation information such that the priority descends in the order of "in operation", "interruption", "not yet", and "completion". For the remote operation request, the remote assist request, and the remote monitoring request as the operation information, the order of priority is set in advance such that the priority descends in the order of the remote operation request, the remote assist request, and the remote monitoring request.

For example, the priority determination unit 15B determines priority to each moving body 22 in descending order of priority in the handling situation information. Then, in a case where a plurality of moving bodies 22, identical in the order of priority in the handling situation information, is present, the priority determination unit 15B makes a determination such that the priority descends in descending order of priority in the operation information. Thus, for example, the operation information and the handling situation information to moving bodies 22 are in the state illustrated in FIG. 3, the priority determination unit 15B determines, per moving body 22, the priority illustrated in FIG. 3. In the present embodiment, a smaller value means a higher priority.

Note that the priority determination unit 15B may make a determination such that the priority descends in ascending order of the total value of the order of priority in the handling situation information and the order of priority in the operation information. For moving bodies 22 identical in the total value of the orders of priority in the handling situation information and the operation information, the priority determination unit 15B is required to determine a higher priority to a moving body 22 higher in the order of priority in the handling situation information.

Then, the priority determination unit 15B registers the determined priority in the handling management DB 14A.

Note that the priority determination unit 15B may adjust the priority determined with the above-described method to raise the priority of a moving body 22 present in a high-risk region or the priority of a moving body 22 present in a particular region, such as a working area, for example, based on the current position of the corresponding moving body 22 and the past operational history to the moving body 22. The priority determination unit 15B may adjust the priority determined with the above-described method to raise the priority of a moving body 22 that is detecting a particular object.

Referring back to FIG. 2, further description will be given.

Based on the priority determined per moving body 22, the upload necessity/unnecessity determination unit 15C determines upload necessity/unnecessity of the first information per moving body 22.

The first information is information to be transmitted from the corresponding moving body system 20 to the information processing apparatus 10. The first information is larger in the amount of data than at least the above-described moving body information. For example, the first information includes the captured picture captured by the picture capturing unit 26 in the moving body system 20. Description will be given below with an assumed mode in which the first information includes at least the captured picture captured by the picture capturing unit 26 in the moving body system 20. However, the first information is not limited to a mode in which the captured picture is included or a mode in which only the captured picture is included.

Based on the priority determined by the priority determination unit 15B, the upload necessity/unnecessity determination unit 15C determines unload necessity/unnecessity of the first information per moving body 22. For example, the upload necessity/unnecessity determination unit 15C determines upload necessity for moving bodies 22, the number of which is identical to a previously determined upload criterial number, in descending order of priority determined by the priority determination unit 15B. For a moving body 22 not determined as upload necessity, the upload necessity/unnecessity determination unit 15C determines upload unnecessity of the first information.

A value less than the total number of the moving bodies 22 as management targets in the information processing system 1 is required to be determined in advance as the upload criterial number. In addition, the upload criterial number may be set by processing described later.

Based on the priority determined per moving body 22 and the handling situation information on the remote task to the moving body 22 by the operator P, the upload necessity/unnecessity determination unit 15C may determine upload necessity/unnecessity of the first information per moving body 22.

For example, based on the handling situation information on the remote task to the moving body 22 by the operator P, the upload necessity/unnecessity determination unit 15C calculates the upload criterial number.

In detail, the upload necessity/unnecessity determination unit 15C calculates, as the number of operators being performing handling, the number of moving body IDs belonging to "in operation" as the handling situation information in the handling management DB 14A. Then, the upload necessity/unnecessity determination unit 15C calculates, as the upload criterial number, the total value of the number of operators being performing handling and the number of handling operators. The number of operators being performing handling means the number of operators P to which the moving bodies 22 to be remotely operated or remotely monitored are allocated.

Assumed is a case where operator information corresponding to moving body IDs 1 to 8 in FIG. 3 is registered in the handling management DB 14A. In this case, the upload necessity/unnecessity determination unit 15C calculates, as the upload criterial number, "3" that is the total value of the number of moving body IDs "1" belonging to "in operation" and the number of handling operators "2" corresponding to two operators of an operator A and an operator B.

The upload necessity/unnecessity determination unit 15C may calculate the above upload criterial number, further using the allowable number of displays on a layout for the captured pictures from moving bodies 22 simultaneously displayed on the operator terminal 30 of one operator P.

For example, the upload necessity/unnecessity determination unit 15C may calculate, as the upload criterial number, a result of calculation from "(the above-described allowable number of displays on a layout to the operator terminal 30 of one operator P + α) × the number of handling operators ".

In a case where the calculated upload criterial number is not less than the total number of the moving bodies 22 as management targets in the information processing system 1, the upload necessity/unnecessity determination unit 15C may calculate, as the upload criterial number, a value less than the total number of the moving bodies 22 as management targets in the information processing system 1. The upload necessity/unnecessity determination unit 15C may calculate, as the upload criterial number, the upper limit calculated based on a communication band. The upload necessity/unnecessity determination unit 15C may calculate, as the upload criterial number, the upper limit of the total amount of data to be uploaded.

Then, based on the handling situation information, the upload necessity/unnecessity determination unit 15C determines upload necessity of the first information for moving bodies 22, the number of which is identical to the upload criterial number, in descending order of priority.

In detail, the upload necessity/unnecessity determination unit 15C reads, one piece by one piece in descending order from the highest priority, the operator handling information associated with the moving body ID in the handling management DB 14A. Then, in a case where the handling situation information included in the operator handling information indicates "completion" and the elapsed time from the handling end time included in the operator handling information is not more than a predetermined time, the upload necessity/unnecessity determination unit 15C determines upload necessity of the first information from the moving body 22 identified by the moving body ID corresponding to the operator handling information. In a case where the handling situation information included in the operator handling information indicates "completion" and the elapsed time from the handling end time included in the operator handling information is more than the predetermined time, the upload necessity/unnecessity determination unit 15C determines upload unnecessity of the first information from the moving body 22 identified by the moving body ID corresponding to the operator handling information.

In a case where the handling situation information on the remote task to the moving body 22 by the operator P included in the operator handling information indicates "interruption" or "in operation", the upload necessity/unnecessity determination unit 15C determines upload necessity of the first information from the moving body 22 identified by the moving body ID corresponding to the operator handling information.

In a case where the handling situation information on the remote task to the moving body 22 by the operator P included in the operator handling information indicates "not yet" and the number of moving bodies 22 already determined as upload necessity and not belonging to "completion" as the handling situation information is less than the above-described number of operators being performing handling, the upload necessity/unnecessity determination unit 15C determines upload necessity of the first information from the moving body 22 identified by the moving body ID corresponding to the operator handling information.

Based on the priority and the handling situation information on the remote task to the moving body 22 by the operator P, the upload necessity/unnecessity determination unit 15C determines upload necessity/unnecessity of the first information per moving body 22, so that upload necessity/unnecessity can be determined for a number of moving bodies 22 requiring handling.

Note that, from the processing situation information on the remote task by the operator P, the upload necessity/unnecessity determination unit 15C may calculate the above-described number of operators being performing handling. As described above, the processing situation information is indicated with at least one of "on standby for the remote task", "in assisted operation" indicating in assistive remote operation, "in remote operation" indicating in remote operation, "remote monitoring interruption" indicating the interruption of the remote operation or monitoring, and the number of requested remote tasks to the operator P. The upload necessity/unnecessity determination unit 15C may calculate, from the processing situation information, the number of moving bodies 22 to which the operator P can respond to use the calculated number of moving bodies 22 as the above-described number of operators being performing handling. In a case where the upload necessity/unnecessity determination unit 15C estimates, from the current time or positional information on the moving body 22, expected end time for the current remote task by the operator P and determines that the current remote task ends within a predetermined time, the operator P may be added to the number of operators being performing handling as a calculation.

Based on the task schedule around the moving body 22, the upload necessity/unnecessity determination unit 15C may calculate a deadline for the remote task to the moving body 22 by the operator P to calculate the above-described number of operators being performing handling further using the deadline.

The upload necessity/unnecessity determination unit 15C determines upload necessity/unnecessity per moving body 22 by the above-described determination processing and registers, in an upload necessity/unnecessity list, a result of determination of upload necessity/unnecessity in association with the respective moving body IDs of the moving bodies 22 as management targets in the information processing system 1.

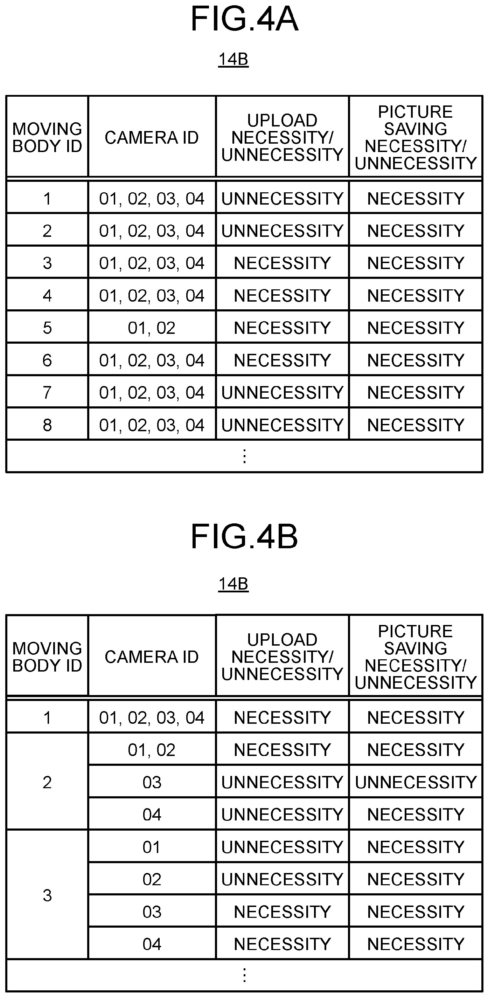

FIG. 4A is a schematic table of an example of the data configuration of an upload necessity/unnecessity list 14B.

The upload necessity/unnecessity list 14B is, for example, a list in which moving body ID, camera ID, upload necessity/unnecessity, and picture saving necessity/unnecessity are associated with each other. The camera ID is the identification information on the picture capturing unit 26 mounted on the moving body 22 identified by the corresponding moving body ID. The data configuration of the upload necessity/unnecessity list 14B is not limited to the list. The upload necessity/unnecessity list 14B is updated due to determination processing by the upload necessity/unnecessity determination unit 15C. The picture saving necessity/unnecessity is information indicating whether or not the captured picture captured by the moving body 22 identified by the corresponding moving body ID should be saved in the storage unit 27, and information indicating all picture saving necessity is initially registered as the picture saving necessity/unnecessity.

For example, assumed is an aspect in which the operator handling information and the priority illustrated in FIG. 3 are registered in association with the moving body IDs "1" to "8" in the handling management DB 14A. In this case, the upload necessity/unnecessity determination unit 15C performs the above-described determination processing to determine the result of determination of upload necessity/unnecessity illustrated in FIG. 4A for each of the moving bodies 22 identified by the moving body IDs "1" to "8".

Note that the upload necessity/unnecessity determination unit 15C may further register, in the upload necessity/unnecessity list 14B, information on the determination condition used in the determination of upload necessity/unnecessity. For example, assumed is an aspect in which an upload criterial number of "3" is calculated with the handling management DB 14A in the state illustrated in FIG. 3. In this case, the moving body 22 identified by the moving body ID "3" is determined as upload unnecessity is determined due to the above-described determination processing by the upload necessity/unnecessity determination unit 15C because the moving body 22 is low in priority and is out of the upload criterial number.

However, in a case where a predetermined condition is fulfilled, the upload necessity/unnecessity determination unit 15C may change the upload criterial number to determine as upload necessity of the first information even for the moving body 22 identified by the moving body ID "3". For example, for moving bodies 22 identical in operation information, the upload necessity/unnecessity determination unit 15C is required to increase the upload criterial number by a predetermined number and perform the above-described determination processing. For example, in a case where the handling situation information indicates "completion" or "interruption", the upload necessity/unnecessity determination unit 15C may determine as upload necessity. In this case, handling can be made even in an assumed case where the operator P conducts a remote task while comparing the situation of another moving body 22.

Specifically, in the example illustrated in FIG. 4A, for a moving body 22 having the moving body ID "4" and the priority indicates "1", the upload necessity/unnecessity determination unit 15C determines upload necessity because the priority "1" is not more in value than the upload criterial number "3" and the handling situation information indicates "in operation". For a moving body 22 having the moving body ID "5" and the priority indicates "2", the upload necessity/unnecessity determination unit 15C determines upload necessity because the priority "2" is not more in value than the upload criterial number "3" and the handling situation information indicates "interruption". For a moving body 22 having the moving body ID "6" and the priority indicates "3", the upload necessity/unnecessity determination unit 15C determines upload necessity because the priority "3" is not more in value than the upload criterial number "3" and the handling situation information indicates "not yet".

For moving bodies 22 having the moving body IDs "2", "7", and "8" and the priorities "4" to "6", the upload necessity/unnecessity determination unit 15C determines upload unnecessity because any of the priorities "4" to "6" is more in value than the upload criterial number "3".

Meanwhile, for a moving body 22 having the moving body ID "3" and the priority "8", the priority "8" is more in value than the upload criterial number "3" and the handling situation information indicates "completion". However, in a case where the upload necessity/unnecessity determination unit 15C recognizes that the operator P verifies the situation after completion of the remote task, the upload necessity/unnecessity determination unit 15C may determine as upload necessity for the moving body 22 with the moving body ID "3" until a predetermined time elapses.

Note that, even in a case where the upload criterial number is changed to make an adjustment for an increase in the number of moving bodies 22 to be determined as upload necessity, the upload necessity/unnecessity determination unit 15C is required to adjust the number of moving bodies 22 in the state of upload necessity at the same timing, less than the total number of the moving bodies 22 as management targets in the information processing system 1. Alternatively, the upload necessity/unnecessity determination unit 15C is required to adjust the number of moving bodies 22 in the state of upload necessity at the same timing or the amount of data to be received, less than the maximum amount of data at the time of simultaneous reception of the respective captured pictures, without data amount reduction processing, from the moving bodies 22 as management targets in the information processing system 1.

The upload necessity/unnecessity determination unit 15C may further determine upload necessity/unnecessity of the captured picture per picture capturing unit 26 mounted on the moving body 22.

For example, for a moving body 22 determined as upload necessity, the upload necessity/unnecessity determination unit 15C determines upload necessity/unnecessity per picture capturing unit 26 in accordance with the moving body information received from the moving body system 20 including the moving body 22 (namely, the moving body edge terminal 21 connected to the moving body 22) and outline information on the remote task to the moving body 22.

FIG. 4B is a schematic table of an example of the data configuration of the upload necessity/unnecessity list 14B.

The upload necessity/unnecessity determination unit 15C determines upload necessity/unnecessity per moving body 22 by the above-described processing. Then, for a moving body 22 determined as upload necessity, the upload necessity/unnecessity determination unit 15C further determines upload necessity/unnecessity per picture capturing unit 26, in accordance with the moving body information received from the moving body system 20 including the moving body 22 and the outline information on the remote task to the moving body 22, and then registers, in the upload necessity/unnecessity list 14B, the upload necessity/unnecessity in association with the moving body 22.

For example, for a moving body 22 having the moving body ID "1", the upload necessity/unnecessity determination unit 15C determines that the moving body 22 is likely to move backward due to positional adjustment based on the moving body information to determine as upload necessity of the captured pictures captured by all the picture capturing units 26 mounted on the moving body 22. For a moving body 22 having the moving body ID "2", because of forward traveling in the traveling direction indicated in the moving body information received from the moving body system 20 including the moving body 22, the upload necessity/unnecessity determination unit 15C determines upload necessity of the captured picture for the picture capturing units 26 identified by camera IDs "01" and "02" for forward capturing. For the picture capturing units 26 identified by camera IDs "03" and "04" for capturing the trunk and rear side of the moving body 22 with the moving body ID "2", the upload necessity/unnecessity determination unit 15C determines upload unnecessity because of captured pictures included in an unnecessary angle of view. In a case where it is determined that no load is present in the trunk from the moving body information, the upload necessity/unnecessity determination unit 15C makes a change to picture saving unnecessity for the camera ID "03" for capturing the trunk.

For a moving body 22 having the moving body ID "3", the upload necessity/unnecessity determination unit 15C determines that a forward captured picture is an unnecessary angle of view, for example, because of in loading operation with no movement, based on the moving body information to determine as upload unnecessity of the captured picture for the picture capturing units 26 identified by camera IDs "01" and "02" for forward capturing. For the picture capturing units 26 identified by camera IDs "03" and "04" for capturing the trunk and rear side of the moving body 22 with the moving body ID "3", the upload necessity/unnecessity determination unit 15C determines that verification of the situation of the trunk and verification of the backward operational situation are required from the moving body information to determine as upload unnecessity.

As above, in accordance with the moving body information received from a moving body system 20 and the outline information on the remote task to the moving body 22 included in the moving body system 20, the upload necessity/unnecessity determination unit 15C may further determine upload necessity/unnecessity per picture capturing unit 26.

The upload necessity/unnecessity determination unit 15C may set the upload criterial number for each of a plurality of groups into which a plurality of moving bodies 22 as management targets in the information processing system 1 is divided and determine, per group, upload necessity/unnecessity for each of the moving bodies 22 belonging to the corresponding group.

For example, in accordance with at least one of a change in the band of the network NW, the area of the network NW, and a physically distinguishable area, the upload necessity/unnecessity determination unit 15C divides a plurality of moving bodies 22 as management targets in the information processing system 1 into a plurality of groups. Then, the upload necessity/unnecessity determination unit 15C determines, per group, upload necessity/unnecessity for each of the moving bodies 22 belonging to the corresponding group.

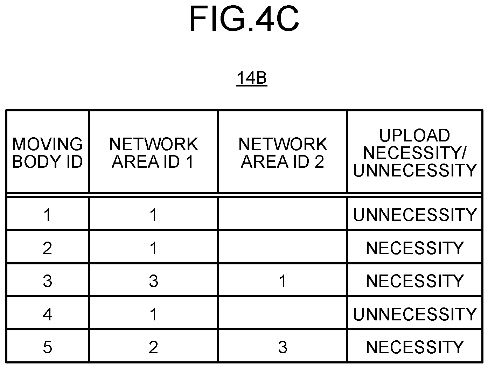

FIG. 4C is a schematic table of an example of the data configuration of the upload necessity/unnecessity list 14B.

For example, the upload necessity/unnecessity determination unit 15C specifies, for each of the positions of moving bodies 22, the network area ID 1 of a network area that the moving body 22 at the corresponding position uses. The network area ID 1 is an example of identification information on the network NW. Then, based on route information on the moving body 22, the upload necessity/unnecessity determination unit 15C specifies the network area ID 2 of a network area on the next route through which the moving body 22 passes within a certain time. The network area ID 2 is an example of identification information on the network NW.

Then, the upload necessity/unnecessity determination unit 15C determines, for each group including the moving bodies 22 identified by a plurality of moving body IDs that causes an overlap of at least part between the network area ID 1 and the network area ID 2 as a pair, upload necessity/unnecessity for each of the moving bodies 22 belonging to the corresponding group by processing similar to the above-described processing.

For example, in the example illustrated in FIG. 4C, because moving body IDs "1" to "4" each have network area ID "1", the moving body IDs "1" to "4" form one group in which at least part overlaps between the network area ID 1 and the network area ID 2 as a pair. Thus, the upload necessity/unnecessity determination unit 15C determines upload necessity/unnecessity, by processing similar to the above-described processing, for the group of the moving body IDs "1" to "4". Meanwhile, the moving body 22 identified by moving body ID "5" has no overlap, in network area, with those of the moving body IDs "1" to "4". Thus, even in a case where the priority of the moving body ID "5" is, for example, low, the upload necessity/unnecessity determination unit 15C may determine as upload necessity.

Note that, in accordance with at least one of a change in the band of the network NW, a network area, and a physical area, the upload necessity/unnecessity determination unit 15C may divide a plurality of moving bodies 22 as management targets in the information processing system 1 into a plurality of groups and set, per group, a criterion for upload necessity/unnecessity, such as the upload criterial number. The upload necessity/unnecessity determination unit 15C may divide a plurality of moving bodies 22 as management targets in the information processing system 1 into a plurality of groups based on the positional information or route information of the moving bodies 22 and set, per group, a criterion for upload necessity/unnecessity, such as the upload criterial number.

Based on the handling situation information and the processing situation information on the operator P, the upload necessity/unnecessity determination unit 15C may further specify a candidate for the moving body 22 that the operator P should next monitor as the moving body 22 to be next determined as upload necessity.

In a case where a plurality of networks NW is included in the information processing system 1, the upload necessity/unnecessity determination unit 15C may specify, for each group in which moving bodies 22 use the same network NW, a candidate for the moving body 22 that the operator P should next monitor. In detail, the moving bodies 22 that use the same network NW means the moving body systems 20 (moving body edge terminals 21) that use the same network NW. The upload necessity/unnecessity determination unit 15C may adjust the upload criterial number in accordance with the band of the network NW in use. In accordance with the task schedule before and after the current remote task of the operator P and the outline information on the previous remote task to the moving body 22 by the operator P, the upload necessity/unnecessity determination unit 15C may specify a candidate for the moving body 22 that the operator P should next monitor. The upload necessity/unnecessity determination unit 15C may specify a candidate for the picture capturing unit 26 of the moving body 22 to be next monitored.

Referring back to FIG. 2, further description will be given.

The upload necessity/unnecessity determination unit 15C transmits the upload necessity/unnecessity information indicating a result of determination of upload necessity/unnecessity determined per moving body 22 to the moving body system 20 including the corresponding moving body 22. In a case where the upload necessity/unnecessity determination unit 15C further determines upload necessity/unnecessity per picture capturing unit 26, the upload necessity/unnecessity determination unit 15C transmits the upload necessity/unnecessity information further including a result of determination of upload necessity/unnecessity for each of the camera IDs of the picture capturing units 26 to the moving body system 20 including the moving body 22. The upload necessity/unnecessity determination unit 15C may further transmit, to the moving body system 20 including the moving body 22, the picture saving necessity/unnecessity information indicating picture saving necessity/unnecessity.

In response to a change in the result of determination of upload necessity/unnecessity to the moving body 22, the upload necessity/unnecessity determination unit 15C may transmit, to the moving body system 20 including the moving body 22, the upload necessity/unnecessity information to the moving body 22. Every time upload necessity/unnecessity is determined, the upload necessity/unnecessity determination unit 15C may transmit, to each moving body system 20, the upload necessity/unnecessity information to the moving body 22 included in the corresponding moving body system 20. The upload necessity/unnecessity determination unit 15C may periodically transmit, to each of a plurality of moving body systems 20, the latest upload necessity/unnecessity information to the moving body 22 included in the corresponding moving body system 20.

As described above, in a case where the upload necessity/unnecessity information indicates upload necessity, the captured picture transmission unit 28D of the moving body system 20 having received the upload necessity/unnecessity information starts to transmit, to the information processing apparatus 10, the first information including the captured picture captured by the picture capturing unit 26. In a case where the upload necessity/unnecessity information indicates upload unnecessity, the captured picture transmission unit 28D terminates the transmission of the first information including the captured picture captured by the picture capturing unit 26 to the information processing apparatus 10, keeps, in a case where the transmission has been completed, the state, or transmits, to the information processing apparatus 10, the captured picture at a minimized transmission quantity.

The upload necessity/unnecessity determination unit 15C may transmit, to the moving body system 20, the upload necessity/unnecessity information further including the determined priority. In this case, in a case where the upload necessity/unnecessity information indicates uploading, the captured picture transmission unit 28D of the moving body system 20 may transmit, to the information processing apparatus 10, the first information having an increase in the amount of information due to an increase in the band consumption of the network NW based on a higher value of priority.

Because the operator P visually verifies the captured picture from the moving body 22 as the target with concentration in remote operation, the operator P is likely not to be able to afford to visually verify the captured picture from another moving body 22. Thus, in a case where the upload necessity/unnecessity information further including the priority determined by the information processing apparatus 10 is received and the priority is not highest, the captured picture transmission unit 28D may transmit, to the information processing apparatus 10, the first information including the captured picture having the amount of data smaller than the amount of data at the time of capturing by the picture capturing unit 26 due to processing, such as a reduction in resolution. In a case where the operator P is not remotely operating, the operator P is likely to visually verify the captured pictures from a plurality of moving bodies 22, simultaneously. Thus, the captured picture transmission unit 28D may transmit, to the information processing apparatus 10, the first information including the captured picture in the amount of data at the time of capturing regardless of priority. As above, the captured picture transmission unit 28D may adjust the amount of data of the first information to be transmitted to the information processing apparatus 10, in accordance with the priority.

Next, the reception control unit 15D of the information processing apparatus 10 will be described.

Based on the operation information regarding the operator P, the reception control unit 15D receives the first information from the moving body system 20. In the present embodiment, the reception control unit 15D receives the first information from the moving body system 20 including a moving body 22 determined as upload necessity, based on the operation information, by the specifying unit 15A, the priority determination unit 15B, and the upload necessity/unnecessity determination unit 15C.

That is, the reception control unit 15D receives, from the moving body system 20 including a moving body 22 selected in accordance with the priority determined based on the operation information, the first information including the captured picture captured by the moving body 22 included in the moving body system 20. In more detail, the reception control unit 15D receives the first information including the captured picture from a moving body 22 determined as upload necessity by the upload necessity/unnecessity determination unit 15C.

In a case where the first information is received at a minimized transmission quantity from the moving body system 20 including a moving body 22 determined as upload unnecessity, the reception control unit 15D stores, into the storage unit 27, the first information in association with the moving body ID of the moving body 22. Also for the first information received from the moving body system 20 including a moving body 22 determined as upload necessity, the reception control unit 15D may store, into the storage unit 27, the first information in association with the moving body ID of the moving body 22. In addition, the reception control unit 15D may sequentially delete, from the storage unit 27, the past first information before the earliest timing in a predetermined period such that the first information including the captured picture captured in the predetermined period from the latest timing to the past is stored into the storage unit 27.

Due to complete disconnection of the session with the moving body system 20, it may take time until the beginning of reception of the first information from the moving body system 20 after the upload necessity/unnecessity information indicating upload necessity is transmitted to the moving body system 20. Thus, the information processing apparatus 10 may have difficulty in outputting the first information to the operator terminal 30 by the timing that the operator P needs. Thus, also for the moving body system 20 including a moving body 22 determined as upload unnecessity, preferably, the reception control unit 15D continues the session with the moving body system 20.

The output control unit 15E outputs, to the operator terminal 30 used by the operator P, the first information received from the moving body system 20 including a moving body 22 determined as upload necessity. In detail, the output control unit 15E outputs the first information received from the moving body system 20 including a moving body 22 determined as upload necessity to the operator terminal 30 used by the operator P identified by the handling operator associated with the moving body ID of the moving body 22 in the handling management DB 14A.

Note that the upload necessity/unnecessity determination unit 15C may further determine upload necessity/unnecessity in accordance with the attribute of the operator P.

The attribute of the operator P is information indicating the task outline or task authority regarding the remote task handled by the operator P. Examples of the attribute of the operator P include "administrator", "operator", and "technical support". The attribute "administrator" corresponds to a user who manages the remote task of a single operator P, the remote tasks of a plurality of operators P, or the information processing system 1. The attribute "operator" corresponds to a user who conducts a remote task. The attribute "technical support" corresponds to a user who provides technical support, for example, for the remote task to a moving body 22.

The attribute of the operator P is required to be set in advance per operator P. In addition, a plurality of attributes may be set to a single operator P.

Description will be given with an exemplary mode in which, for example, three types of "administrator", "operator", and "technical support" are provided as the attribute of the operator P. In addition, description will be given with an assumed case where a single type of attribute is set for each operator P.

In this case, the operator handling information is required to further include the attribute of the operator P. That is, the operator handling information is required to include the attribute of the operator P identified by the handling operator included in the operator handling information.

Then, the upload necessity/unnecessity determination unit 15C further determine upload necessity/unnecessity in accordance with the attribute of the operator P.

For example, the upload necessity/unnecessity determination unit 15C specifies, as the upload-destination operator P for the first information, the handling operator registered in the handling management DB 14A. Then, in a case where the number of upload-destination operators P is two or more, the upload necessity/unnecessity determination unit 15C performs the following processing. Note that, even in a case where the number of upload-destination operators P is one, the upload necessity/unnecessity determination unit 15C may perform similar processing.

For the moving body 22 identified by the moving body ID corresponding to the handling operator for which the attribute of the operator P indicates "operator" in the handling management DB 14A, the upload necessity/unnecessity determination unit 15C determines upload necessity/unnecessity by determination processing similar to the above-described determination processing.

Also for the moving body 22 identified by the moving body ID corresponding to the specified handling operator for which the attribute of the operator P indicates "administrator" in the handling management DB 14A, the upload necessity/unnecessity determination unit 15C determines upload necessity/unnecessity by determination processing similar to the above-described determination processing. Then, in response to determination of upload necessity, the upload necessity/unnecessity determination unit 15C further gives, to a result of the determination, instruction information that instructs the operator P for which the attribute indicates "administrator" to perform uploading at a transmission quantity less than that of the operator P for which the attribute indicates "operator". In a case where interest information indicating interest is received from the operator terminal 30 of the operator P for which the attribute indicates "administrator" and upload necessity is determined, the upload necessity/unnecessity determination unit 15C may give, to a result of the determination, the instruction information that instructs the operator P for which the attribute indicates "administrator" to perform uploading at a transmission quantity less than that of the operator P for which the attribute indicates "operator".

Then, in this case, the upload necessity/unnecessity determination unit 15C is required to register, in the upload necessity/unnecessity list, upload necessity and the instruction information in association. In a case where the upload necessity/unnecessity information indicates upload necessity and is given the instruction information, the captured picture transmission unit 28D of the moving body 22 is required to transmit, to the information processing apparatus 10, the first information including the captured picture captured by the picture capturing unit 26 at a transmission quantity less than the transmission quantity of the first information to the operator P for which the attribute indicates "operator". In a case where the band has leeway, the captured picture transmission unit 28D of the moving body 22 may transmit, to the information processing apparatus 10, the first information at the corresponding transmission quantity. The output control unit 15E of the information processing apparatus 10 is required to output the first information received from the moving body 22 to the operator terminal 30 corresponding to "administrator" as the attribute associated with the corresponding moving body ID by the specifying unit 15A.

In this case, the information processing apparatus 10 can upload the first information including the captured picture in which the administrator is interested, at a transmission quantity less than the transmission quantity of the first information to the operator P for which the attribute indicates "operator" and output the first information to the operator terminal 30 corresponding to "administrator" as the attribute.

Assumed is a case where the attribute of the operator P associated with the moving body ID of a moving body 22 determined as upload necessity by the upload necessity/unnecessity determination unit 15C indicates "technical support" in the handling management DB 14A. In addition, assumed is a case where the operation information on the moving body 22 specified by the specifying unit 15A indicates a high necessity of operation, for example, the above-described remote operation request. In this case, the moving body 22 needs more technical support. Thus, the output control unit 15E of the information processing apparatus 10 may continuously output the first information received due to transmission from the captured picture transmission unit 28D of the moving body 22, as the first information on a vehicle of interest, to the operator terminal 30 corresponding to "technical support" as the attribute associated with the corresponding moving body ID by the specifying unit 15A.

In this case, the information processing apparatus 10 can accept continuous uploading of the first information on a vehicle of interest that is the moving body 22 corresponding to a high necessity of operation, namely, requiring more support and continuously output the first information to the operator terminal 30 of the operator P for which the attribute indicates "technical support".

The output control unit 35C of the operator terminal 30 having received the first information displays the received first information on the output unit 33. As described above, in the present embodiment, description will be given with an assumed mode in which the first information includes the captured picture. Thus, the output control unit 15E displays, on the output unit 33, the captured picture included in the first information received from the moving body system 20.

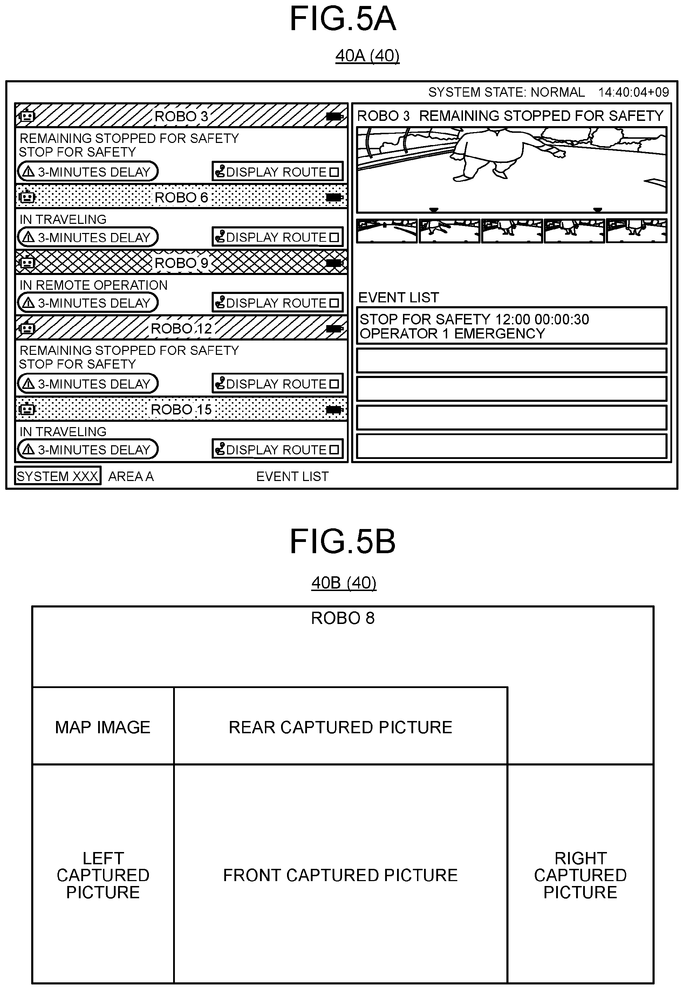

FIGS. 5A and 5B are schematic views of examples of a display screen 40 displayed on the output unit 33 of an operator terminal 30. FIG. 5A illustrates a display screen 40A, and FIG. 5B illustrates a display screen 40B. The display screen 40A and the display screen 40B are examples of the display screen 40.

As illustrated in FIG. 5A, for example, the display screen 40A including a list of the respective captured pictures of a plurality of moving bodies 22 that an operator P monitors as targets and a list of remote tasks of the operator P is displayed on the output unit 33. When the operator P starts to conduct a remote task, such as a remote operation, to a particular moving body 22, an enlarged captured picture of the periphery of the moving body 22 is displayed or the display screen 40B including only captured pictures of the periphery of the moving body 22 is displayed on the output unit 33 (refer to FIG. 5B). The operator P operates the input unit 32 with reference to the display screen 40, so that a remote task, such as a remote operation or remote monitoring, can be conducted to the moving body 22.

Next, a flow of information processing to be performed in the information processing system 1 according to the present embodiment will be described.

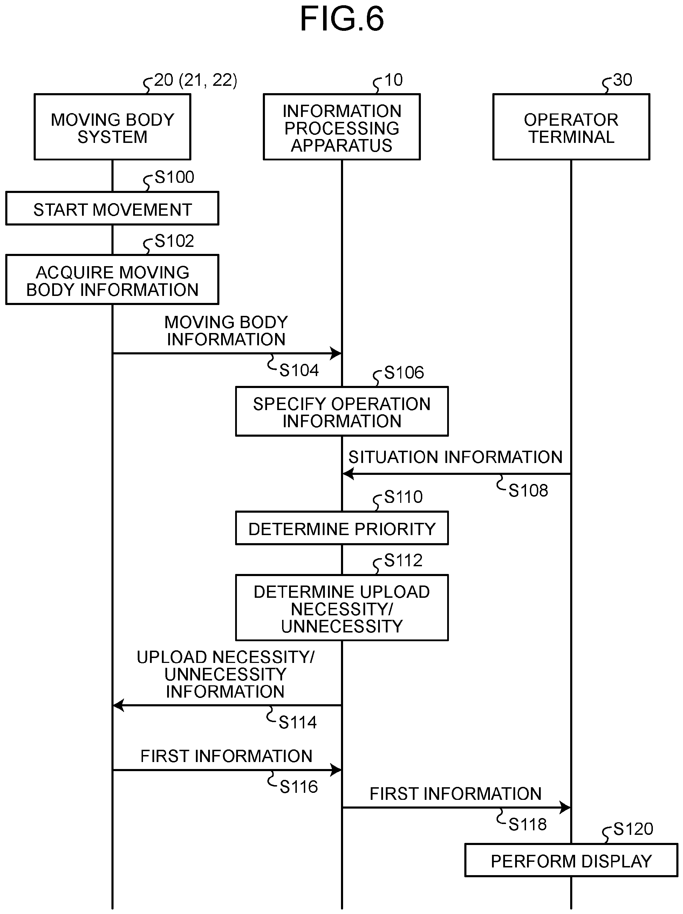

FIG. 6 is a sequence diagram illustrating an exemplary flow of information processing to be performed in the information processing system 1 according to the present embodiment.

The moving body 22 included in a moving body system 20 starts autonomous movement in response to reception of traveling instruction information from the information processing apparatus 10 or based on its operational schedule (Step S100).

The moving body information transmission unit 28C of the moving body system 20 acquires the moving body information (Step S102) and then transmits the moving body information to the information processing apparatus 10 (Step S104).

The specifying unit 15A of the information processing apparatus 10 specifies the operation information per moving body 22, for example, based on the moving body information received in Step S104 (Step S106).

For example, based on the operation information specified in Step S106 and the situation information received from an operator terminal 30 (Step S108), the priority determination unit 15B of the information processing apparatus 10 determines priority per moving body 22 (Step S110).

The upload necessity/unnecessity determination unit 15C of the information processing apparatus 10 determines upload necessity/unnecessity per moving body 22, based on the priority determined in Step S110 (Step S112) and then transmits the upload necessity/unnecessity information indicating upload necessity/unnecessity to the moving body system 20 (Step S114).

In a case where the upload necessity/unnecessity information received in Step S114 indicates upload necessity, the captured picture transmission unit 28D of the moving body system 20 transmits, to the information processing apparatus 10, the first information including the captured picture captured by the picture capturing unit 26 (Step S116).

The reception control unit 15D of the information processing apparatus 10 receives the first information from the moving body system 20 (Step S116) and then transmits the received first information to the operator terminal 30 (Step S118). The operator terminal 30 having received the first information displays the received first information on the output unit 33 (Step S120). Then, the present sequence terminates.

Next, an exemplary flow of information processing to be performed by a moving body system 20 according to the present embodiment will be described.

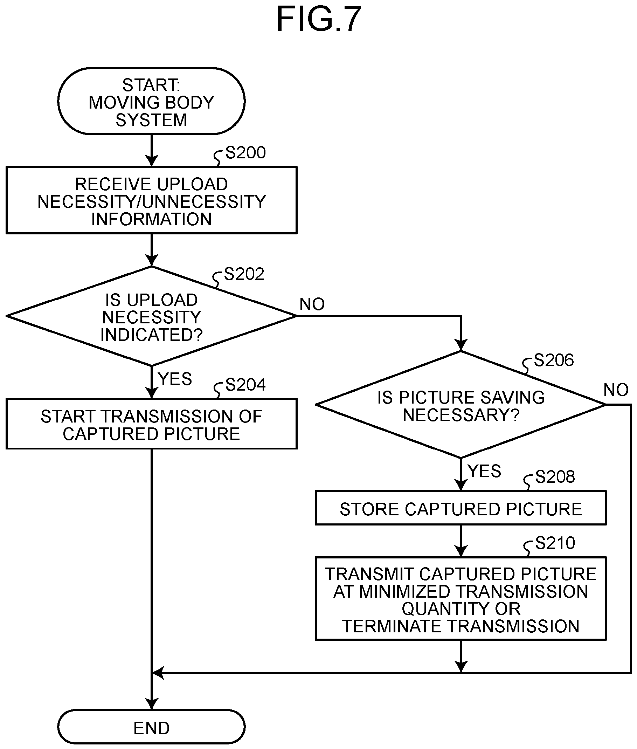

FIG. 7 is a flowchart illustrating an exemplary flow of information processing to be performed by a moving body system 20 according to the present embodiment.

The communication control unit 28A receives the upload necessity/unnecessity information from the information processing apparatus 10 (Step S200).

The captured picture transmission unit 28D determines whether or not the upload necessity/unnecessity information received in Step S200 indicates upload necessity (Step S202). In a case where the determination indicates that the upload necessity/unnecessity information indicates upload necessity (Step S202: Yes), the processing proceeds to Step S204.

In Step S204, the captured picture transmission unit 28D starts to transmit, to the information processing apparatus 10, the first information including the captured picture captured by the picture capturing unit 26 (Step S204). Then, the present routine terminates.

On the other hand, in a case where the determination in Step S202 indicates that the upload necessity/unnecessity information indicates upload unnecessity (Step S202: No), the processing proceeds to Step S206. In Step S206, the captured picture transmission unit 28D determines whether or not the picture saving necessity/unnecessity information received from the information processing apparatus 10 indicates picture saving necessity (Step S206). In a case where the captured picture transmission unit 28D determines that the picture saving necessity/unnecessity information indicates picture saving unnecessity (Step S206: No), the present routine terminates.

In a case where the captured picture transmission unit 28D determines that the picture saving necessity/unnecessity information indicates picture saving necessity (Step S206: Yes), the captured picture transmission unit 28D performs previously determined processing to the captured picture and then stores the processed captured picture into the storage unit 27 (Step S208).

Then, the captured picture transmission unit 28D terminates the transmission of the first information including the captured picture captured by the picture capturing unit 26 to the information processing apparatus 10, keeps, in a case where the transmission has been completed, the state, or transmits, to the information processing apparatus 10, the first information including the captured picture at a minimized transmission quantity (Step S210). Then, the present routine terminates.

Next, an exemplary flow of information processing to be performed by the information processing apparatus 10 according to the present embodiment will be described.

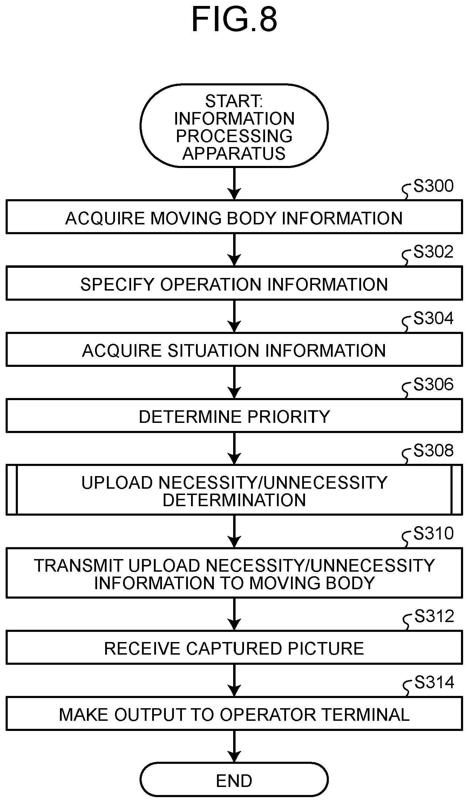

FIG. 8 is a flowchart illustrating an exemplary flow of information processing to be performed by the information processing apparatus 10 according to the present embodiment.

The specifying unit 15A of the information processing apparatus 10 acquires the moving body information from each of moving body systems 20 including one-to-one a plurality of moving bodies 22 as management targets in the information processing system 1 (Step S300).

Based on the moving body information received in Step S300, the specifying unit 15A specifies the operation information per moving body 22 (Step S302).

Then, the priority determination unit 15B acquires the situation information from an operator terminal 30 (Step S304) .

Next, based on the operation information specified in Step S302 and the situation information acquired in Step S304, the priority determination unit 15B determines priority per moving body 22 (Step S306). Then, the priority determination unit 15B registers the determined priority in the handling management DB 14A.

Based on the priority determined per moving body 22 and the handling situation information on the remote task to the moving body 22 by the operator P, the upload necessity/unnecessity determination unit 15C performs determination processing to determine upload necessity/unnecessity of the first information per moving body 22 (Step S308). Using the priority determined in Step S306 and the handling situation information included in the situation information acquired in Step S304, the upload necessity/unnecessity determination unit 15C is required to perform the processing in Step S308.

The upload necessity/unnecessity determination unit 15C transmits the upload necessity/unnecessity information indicating a result of determination of upload necessity/unnecessity determined per moving body 22 by the determination processing in Step S308 to the moving body system 20 including the corresponding moving body 22 (Step S310). In a case where the upload necessity/unnecessity information indicates upload necessity, the captured picture transmission unit 28D of the moving body system 20 having received the upload necessity/unnecessity information starts to transmit, to the information processing apparatus 10, the first information including the captured picture captured by the picture capturing unit 26.

The reception control unit 15D receives the first information from the moving body system 20 including the moving body 22 determined as upload necessity (step S312). The output control unit 15E outputs the first information to the operator terminal 30 (Step S314). Then, the present routine terminates.

Next, an exemplary flow of determination processing for upload necessity/unnecessity to be performed by the upload necessity/unnecessity determination unit 15C of the information processing apparatus 10 will be described.

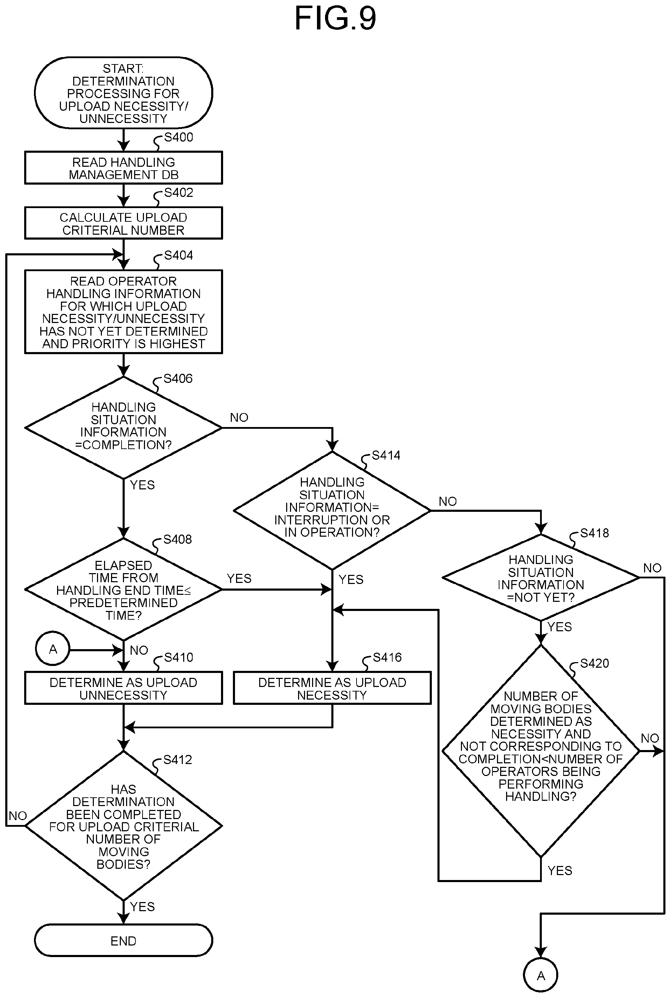

FIG. 9 is a flowchart of an exemplary determination processing for upload necessity/unnecessity to be performed by the upload necessity/unnecessity determination unit 15C of the information processing apparatus 10. The flowchart illustrated in FIG. 9 corresponds to an exemplary detailed flowchart of the determination processing in Step S308 in FIG. 8.

The upload necessity/unnecessity determination unit 15C reads, from the storage unit 14, the handling management DB 14A registered and updated by the priority determination unit 15B (Step S400).

Then, using the handling management DB 14A read in Step S400, the upload necessity/unnecessity determination unit 15C calculates the upload criterial number (Step S402). In detail, for example, the upload necessity/unnecessity determination unit 15C calculates, as the number of operators being performing handling, the number of moving body IDs belonging to "in operation" as the handling situation information in the handling management DB 14A. Then, the upload necessity/unnecessity determination unit 15C calculates, as the upload criterial number, the total value of the number of operators being performing handling and the number of handling operators.

Then, the upload necessity/unnecessity determination unit 15C reads the operator handling information associated with the moving body ID highest in priority in moving body IDs to which upload necessity/unnecessity has not been determined yet, registered in the handling management DB 14A (Step S404).

The upload necessity/unnecessity determination unit 15C determines whether or not the handling situation information included in the operator handling information read in Step S404 indicates "completion" (Step S406). In a case where affirmative determination is made in Step S406 (Step S406: Yes), the upload necessity/unnecessity determination unit 15C determines whether or not the elapsed time from the handling end time included the operator handling information read in Step S404 is not more than a predetermined time (Step S408).

Then, in a case where the determination in Step S408 indicates that the elapsed time is more than the predetermined time (Step S408: No), the upload necessity/unnecessity determination unit 15C determines upload unnecessity (Step S410). Then, the upload necessity/unnecessity determination unit 15C determines whether or not determination of upload necessity/unnecessity has been completed for moving bodies 22, the number of which is identical to the upload criterial number calculated in Step S402 (Step S412). In a case where negative determination is made in Step S412 (Step S412: No), the processing goes back to Step S404 described above. In a case where affirmative determination is made in Step S412 (Step S412: Yes), the present routine terminates.

On the other hand, in a case where the determination in Step S408 indicates that the elapsed time is not more than the predetermined time (Step S408: Yes), the processing proceeds to Step S416 described later.

In a case where the determination in Step S406 described above indicates that the handling situation information indicates no "completion" (Step S406: No), the processing proceeds to Step S414.

In Step S414, the upload necessity/unnecessity determination unit 15C determines whether or not the handling situation information included in the operator handling information read in Step S404 indicates "interruption" or "in operation" (Step S414). In a case where affirmative determination is made in Step S414 (Step S414: Yes), the processing proceeds to Step S416. In Step S416, the upload necessity/unnecessity determination unit 15C determines upload necessity (Step S416), and the processing proceeds to Step S412 described above.

In a case where negative determination is made in Step S414 described above (Step S414: No), the processing proceeds to Step S418. In Step S418, the upload necessity/unnecessity determination unit 15C determines whether or not the handling situation information included in the operator handling information read in Step S404 indicates "not yet" (Step S418). In a case where the determination in Step S418 indicates "not yet" (Step S418: Yes), the processing proceeds to Step S420. In Step S420, the upload necessity/unnecessity determination unit 15C determines whether or not the number of moving bodies 22 determined as upload necessity and not belonging to "completion" as the handling situation information is less than the number of operators being performing handling used in the calculation of the upload criterial number in Step S402 (Step S420).

In a case where the determination in Step S418 indicates no "not yet" (Step S418: No), the processing proceeds to Step S410 described above. In a case where negative determination is made in Step S420 (Step S420: No), the processing proceeds to Step S410 described above.

As described above, an information processing method according to the present embodiment is to be performed by the information processing apparatus 10 and includes receiving, based on the operation information regarding an operator P who monitors a moving body 22, the first information from the moving body 22.

As above, according to the information processing method according to the present embodiment, instead of reception of the first information from the moving body 22 with no operation information, the first information is received from the moving body 22 based on the operation information.

Thus, according to the information processing method according to the present embodiment, excessive information, such as an excessive captured picture, to which the operator P fails to respond, can be inhibited from being uploaded from the moving body 22, and therefore, it is possible to inhibit the communication traffic volume from being enormous.

Therefore, the information processing method according to the present embodiment enables reduction of the communication traffic volume.

According to the information processing method according to the present embodiment, the operation information regarding the necessity of operation by the operator P is specified per moving body 22 based on the moving body information regarding the traveling environment of the moving body 22, and priority is determined per moving body 22 based on the operation information. Then, according to the information processing method according to the present embodiment, the first information including the captured picture captured by a moving body 22 selected in accordance with the priority is received.

Thus, according to the information processing method according to the present embodiment, the first information can be received selectively from among moving bodies 22 requiring monitoring by the operator P. That is, according to the information processing method according to the present embodiment, the first information is received preferentially from a moving body 22 selected in accordance with the priority based on the operation information regarding the necessity of operation by the operator P, regardless of the state of the moving body 22. According to the information processing method according to the present embodiment, the first information can be received selectively from among moving bodies 22 requiring monitoring by the operator P. Thus, the information processing method according to the present embodiment enables to efficiently provide the first information necessary for operation by the operator P to the operator terminal 30 while reducing the communication traffic volume.

In addition to the above effect, the information processing method according to the present embodiment enables, for example, inhibition of a band shortage of communication, a reduction in the communication amount, a reduction in the store of data of the information processing apparatus 10, and a reduction in the management expenses of the information processing apparatus 10.

According to the information processing method according to the present embodiment, in accordance with the priority based on the operation information regarding the necessity of operation by the operator P, the first information is received from the moving body 22. Thus, regardless of the state of the moving body 22 currently displayed on the operator terminal 30, the first information can be received from the moving body 22 in accordance with the necessity of operation to the moving body 22.

### (Modifications)

Note that the reception control unit 15D may receive the first information from a predetermined number of moving bodies 22 based on the processing situation information on the operator P in descending order of priority, from among moving bodies 22 determined as upload necessity of the first information, and the output control unit 15E may output the first information to the operator terminal 30 in accordance with the processing situation information on the operator P.

That is, in a case where, at the timing at which all the captured pictures captured by moving bodies 22 determined as upload necessity are actually required, the information processing apparatus 10 receives the first information including the captured picture from each moving body 22 and then outputs the first information to the operator terminal 30, the beginning of processing by the operator P may be delayed. Thus, preferably, the first information on a moving body 22 to which the operator P may remotely respond is uploaded in advance from the moving body system 20 including the moving body 22 to the information processing apparatus 10.

For example, assumed is a case where 30 moving bodies 22 are provided as management targets in the information processing system 1 and a single operator P is provided. In addition, assumed is a case where the operator P concentrates on a single moving body 22 in remote control and the number of moving bodies 22 simultaneously displayable on the operator terminal 30 of the single operator P is a maximum of four.

Then, the following situation is assumed. In detail, assumed is a case where the operation information corresponding to moving body ID "A" indicates "remote operation request", the operation information corresponding to moving body IDs "B" and "C" indicates "remote assist request", and the operation information corresponding to moving body IDs "D" to "G" is going to indicate "remote assist request" within five minutes.

In this case, due to the above-described processing by the information processing apparatus 10, the moving body 22 identified by the moving body ID "A" corresponding to "remote operation request" as the operation information is determined as upload necessity and the first information including the captured picture from the moving body 22 is displayed on the operator terminal 30 of the operator P.

Immediately after the remote task to the moving body 22 by the operator P is finished, preferably, the first information including the captured picture from a moving body 22 corresponding to "remote assist request" as new operation information, from among the moving body IDs "B" to "G" corresponding to "remote assist request" as the operation information, is displayed on the operator terminal 30. However, even in a case where the captured picture is transmitted from the moving body 22 to the information processing apparatus 10 at this timing, it takes time for display on the operator terminal 30.

That is, at the timing of necessity on the side of the operator P, preferably, the first information including the captured picture captured by the moving body 22 as the target has already been transmitted (uploaded) from the moving body system 20 including the moving body 22 to the information processing apparatus 10.

Thus, the first information requires advance transmitting from each of the moving body systems 20 including one-to-one the moving bodies 22 identified by the moving body IDs "B" to "G" to which the operator P may respond next, to the information processing apparatus 10.

For the moving bodies 22 identified by the moving body IDs "B" to "G" to which the operator P may respond next, the operator P is likely to operate while viewing the respective captured pictures captured by the moving bodies 22. Even in a case where the captured pictures captured by four moving bodies 22 with the moving body IDs "B" to "E" are displayed on the operator terminal 30, due to a switch in display, the operator P verifies the captured pictures captured by the moving bodies 22 identified by the moving body IDs "F" and "G" to properly select a moving body 22 to which the operator P responds next. Thus, also for the moving bodies 22 identified by the moving body IDs "F" and "G", the captured pictures captured by the moving bodies 22 require transmitting to the information processing apparatus 10.

Thus, in response to proximity to a particular spot, time, or schedule related to the operation information indicating the remote operation request, remote assist request, or remote monitoring request, at the particular spot, time, or schedule, or in response to specification of new operation information, the reception control unit 15D starts to receive the first information from moving body systems 20 including one-to-one a predetermined number of moving bodies 22 in the order in which the operator P may respond to, for example, based on the priority or the task schedule of the operator P, from among moving bodies 22 determined as upload necessity. Then, the output control unit 15E displays the received first information on the output unit 33 of the operator terminal 30, at the timing at which the first information is displayable to the operator P in accordance with the processing situation information on the operator P.

As above, the reception control unit 15D receives, in advance, the first information on a moving body 22 to which the operator P is likely to remotely respond, from the moving body system 20 including the moving body 22. Then, the output control unit 15E may output, to the operator terminal 30, the first information in order in accordance with the processing situation information on the operator P.

Note that the reception control unit 15D may receive the first information from moving body systems 20 including one-to-one a predetermined number of moving bodies 22 corresponding to the number of operators P in descending order of priority, from among moving bodies 22 determined as upload necessity, and the output control unit 15E may output the first information to the operator terminal 30 in accordance with the processing situation information on the operator P.

That is, in a case where, at the timing at which all the captured pictures captured by moving bodies 22 determined as upload necessity are actually required, the information processing apparatus 10 receives the first information including the captured picture from each moving body system 20 and then outputs the first information to the operator terminal 30, the beginning of processing by the operator P may be delayed. Thus, preferably, the first information on a moving body 22 to which a plurality of operators P is each likely to remotely respond is transmitted in advance from the moving body system 20 including the moving body 22 to the information processing apparatus 10.

For example, assumed is a case where 30 moving bodies 22 are provided as management targets in the information processing system 1 and two or more operators P are provided. In addition, assumed is a case where each operator P concentrates on a single moving body 22 in remote control and the number of moving bodies 22 simultaneously displayable on the operator terminal 30 of each operator P is a maximum of four.

Then, the following situation is assumed. In detail, assumed is a case where the operation information corresponding to moving body IDs "A" to "C" indicates "remote operation request", the operation information corresponding to moving body IDs "D" to "G" indicates "remote assist request", and the operation information corresponding to moving body IDs "H" to "K" is going to indicate "remote assist request" within five minutes.

In this case, due to the above-described processing by the information processing apparatus 10, the moving bodies 22 identified by the moving body IDs "A" and "B" corresponding to "remote operation request" as the operation information are determined as upload necessity and the first information including the captured pictures from the moving bodies 22 is displayed on the operator terminal 30 of each of two operators P.

In this case, in a case where the number of operators P is one, the operator P concentrates on a single moving body 22 in remote control, and thus the first information on a moving body 22 corresponding to "remote assist request" as the operation information requires no outputting to the operator terminal 30. On the other hand, in a case where the number of operators P is two, the first information on a moving body 22 corresponding to "remote assist request" as the operation information requires transmitting from the moving body system 20 including the moving body 22 to the information processing apparatus 10, similarly to the case where the number of operators P is one.

Thus, in response to proximity to a particular spot, time, or schedule related to the operation information indicating the remote operation request, remote assist request, or remote monitoring request, at the particular spot, time, or schedule, or in response to specification of new operation information, the reception control unit 15D starts to receive the first information from moving body systems 20 including one-to-one a predetermined number of moving bodies 22 corresponding to the number of operators P in the order in which the operators P may each respond to, for example, based on the priority or the task schedule of each operator P, from among moving bodies 22 determined as upload necessity. Then, the output control unit 15E displays the received first information on the output unit 33 of each operator terminal 30, at the timing at which the first information is displayable to the corresponding operator P in accordance with the processing situation information on the operator P.

As above, even in a case where a plurality of operators P is provided, the reception control unit 15D receives in advance the first information on a moving body 22 to which the operators P are each likely to remotely respond, from the moving body system 20 including the moving body 22. Then, in accordance with the processing situation information on each operator P, the output control unit 15E may output the first information in order to each operator terminal 30.

Note that, in accordance with environment information on a moving body 22, the reception control unit 15D may continuously receive the first information from the moving body system 20 including the moving body 22 even after termination of the remote task to the moving body 22 by the operator P.

The environment information is information indicating an event occurring in the environment around the moving body 22. The moving body information transmission unit 28C is required to analyze, using a publicly known method, a result of detection from the sensor 22A and the captured picture by the picture capturing unit 26 to acquire the environment information on the moving body 22 and transmit the environment information included in the moving body information to the information processing apparatus 10.

Then, in a case where the environment information received from the moving body system 20 indicates the occurrence of an event that the operator P is not required to verify immediately but is highly likely to verify later, the reception control unit 15D receives the first information including the captured picture captured by the moving body 22 included in the moving body system 20 from the moving body system 20.

For example, assumed is an aspect in which the captured picture captured by a moving body 22 is stored in a resolution lower than that at the time of capturing in the storage unit 27 of the moving body system 20 including the moving body 22 but fails to be verified immediately on the side of an operator terminal 30.

Then, assumed is a situation in which the operator P is not required to make any immediate handling to the captured picture by the moving body 22 but is highly likely to verify the captured picture with some frequency later. In detail, basically, the operation to the moving body 22 by the operator P is not required but complete unnecessity of the operation is risky, and thus the operation may be rarely required. In a case where a continuous captured picture over a period including the duration of no operation is useful, the continuous captured picture may be practically used, for example, for task analysis. For example, handling has already been made to a moving body 22 at a site. While a team including the person in charge of the periphery of the moving body 22 is taking over the handling, the operator P is allowed to operate another moving body 22. However, the operator P may be required to operate the former moving body 22 by remote operating. Assumed is a case where the operator P conducts a task in cooperation with the task of the local staff in charge of the periphery of a moving body 22 and the moving body 22 is on standby for the task. In this case, although a temporarily unnecessary period occurs in the operation to the moving body 22 by remote operating, the operator P may need to verify the captured picture by the moving body 22, for example, in order to grasp a connection between before and after the period.

Thus, in a case where a remote task is conducted to a moving body 22 by the operator P and then a predetermined remote task that may cause resumption of monitoring is connectedly being conducted to the moving body 22 again, the reception control unit 15D may continue the reception of the first information from the moving body system 20 including the moving body 22 even in a case where the output of the first information from the information processing apparatus 10 to the operator terminal 30 is made unnecessary because of the termination of monitoring by the operator P.

That is, in accordance with the environment information on the moving body 22, the reception control unit 15D may continuously receive the first information including the captured picture from the moving body system 20 including the moving body 22 even after termination of the remote task to the moving body 22 by the operator P.

Note that, as described above, the upload necessity/unnecessity determination unit 15C may determine upload necessity/unnecessity per picture capturing unit 26 mounted on a moving body 22. Then, for a moving body 22 determined as upload necessity, the reception control unit 15D may receive the first information including the captured picture captured by a picture capturing unit 26 determined as upload necessity and the captured picture captured by a picture capturing unit 26 determined as upload unnecessity. Then, in accordance with the processing situation information on the operator P, the output control unit 15E may output, to the operator terminal 30, the first information including a captured picture based on a result of determination of upload necessity/unnecessity to the picture capturing units 26, from among the captured pictures captured by the picture capturing units 26 of the moving body system 20 including the moving body 22.

For example, assumed is a case where the captured picture is stored in a resolution lower than that at the time of capturing in the storage unit 27 of the moving body system 20 but fails to be verified immediately on the side of the operator terminal 30.

Then, assumed is a situation in which the captured pictures captured by all the picture capturing units 26 mounted on the moving body 22 are not necessarily transmitted to the information processing apparatus 10 and the operator P conducts a remote task while verifying the situation around the moving body 22 due to a switch between the respective captured pictures captured by a plurality of picture capturing units 26 different in capturing direction in a limited screen area.

In this case, when the operator P is conducting a remote task to the moving body 22, namely, in operation, the reception control unit 15D of the information processing apparatus 10 receives the respective captured pictures captured by all the picture capturing units 26 mounted on the moving body 22. Then, for a remote task to be conducted by the operator P, such as a remote operation for connection of a tractor, the output control unit 15E outputs a captured picture showing the tractor with high quality to the operator terminal 30. In a case where the operator P remotely operates the moving body 22 to travel as a remote task, the output control unit 15E outputs the captured picture captured by a picture capturing unit 26 that captures the periphery of the moving body 22 with high quality to the operator terminal 30. The output control unit 15E may output all the captured pictures captured by the picture capturing units 26 mounted on the moving body 22 with high quality to the operator terminal 30.

Assumed is a case where a remote task to a moving body 22 is registered in a queue for scheduled remote tasks by an operator P who has not conducted the remote task. In this case, the reception control unit 15D selectively receives the captured picture captured by a picture capturing unit 26 that performs capturing in a previously determined direction for display on the initial screen at the beginning of the remote task to the moving body 22 by the operator P, from the moving body system 20 including the moving body 22. When the moving body 22 remains stopped, the reception control unit 15D selectively receives the captured picture captured by a picture capturing unit 26 that performs capturing in a capturing direction related to the scheduled remote task to the moving body 22, from the moving body system 20 including the moving body 22. For example, in a case where the scheduled remote task corresponds to traction traveling, the reception control unit 15D receives the captured picture captured by a picture capturing unit 26 that captures the connection of the moving body 22 for traction traveling, from the moving body system 20 including the moving body 22. In a case where the moving body 22 is traveling, the reception control unit 15D receives the captured picture captured by a picture capturing unit 26 that performs capturing in the traveling direction of the moving body 22, from the moving body system 20 including the moving body 22.

In a case where the moving body 22 requires no operating, the reception control unit 15D receives no captured picture from the moving body system 20 including the moving body 22.

As above, even in a case where the captured picture used for operation on the operator terminal 30 corresponds to the captured picture captured by at least one picture capturing unit 26 of a plurality of picture capturing units 26 provided to the moving body 22, the reception control unit 15D may receive the first information including the captured picture captured by a picture capturing unit 26 that performs capturing in the capturing direction used for operation and the captured picture captured by another picture capturing unit 26 from the moving body system 20 including the moving body 22 such that the operator P can visually verify another captured picture due to a switch.

Note that, based on at least either the handling situation information of the remote task to the moving body 22 by the operator P or the handling start time, the reception control unit 15D may adjust the timing for receiving the first information from the moving body system 20 including the moving body 22.

In detail, based on at least one of the handling situation information on the remote task to the moving body 22 by the operator P, the handling content of the remote task, and the handling start time, the reception control unit 15D adjusts the timing for receiving the first information from the moving body system 20 including the moving body 22. In accordance with the degree of importance of the remote task to the moving body 22 by the operator P, the reception control unit 15D may adjust the timing for receiving the first information from the moving body system 20 including the moving body 22.

For example, assumed is a case where an operator P monitors a moving body 22 all the time. Then, assumed is an aspect in which the captured pictures captured by four moving bodies 22 corresponding to moving body IDs "A to "D" are displayed on the operator terminal 30 that an operator P operates and the operator P monitors the four moving bodies 22. Then, assumed is an aspect in which the operator P remotely operates the moving body 22 identified by moving body ID "E" and then continues to monitor the four moving bodies 22 again. In such an aspect, the reception control unit 15D receives the first information including the captured pictures captured by the four moving bodies 22 with the moving body IDs "A" to "D" from the moving body systems 20 including one-to-one the moving bodies 22. Then, the reception control unit 15D next stops the reception of the first information including the captured pictures from the moving body IDs "A" to "D" and then receives the first information including the captured picture captured by the moving body 22 with the moving body ID "E" from the moving body system 20 including the moving body 22. Then, the reception control unit 15D next receives the captured pictures captured in the moving body systems 20 including one-to-one the moving bodies 22 with the moving body IDs "A" to "D" from the moving body systems 20.

As above, based on at least either the handling situation information on the remote task to the moving body 22 by the operator P or the handling start time, the reception control unit 15D may adjust the timing for receiving the first information from the moving body 22.

Further using information such as the moving body information, the remote task schedule of the operator P, the situation of the network NW, and information as to whether or not a moving body 22 is present in a particular upload target region in the real space, the reception control unit 15D may adjust the timing for receiving the first information from the moving body system 20 including the moving body 22.

For example, for a moving body 22 present in a region in the band of the network NW different from that of a moving body 22 as the remote operation target, the reception control unit 15D may receive the first information at the timing overlapping a reception period for receiving the first information from the moving body system 20 including the moving body 22 as the remote operation target.

In the information processing apparatus 10, due to adjustment of the upload criterial number based on at least either the handling situation information on the remote task to the moving body 22 by the operator P or the handling start time, the reception control unit 15D may adjust the timing for receiving the first information from the moving body system 20 including the moving body 22.

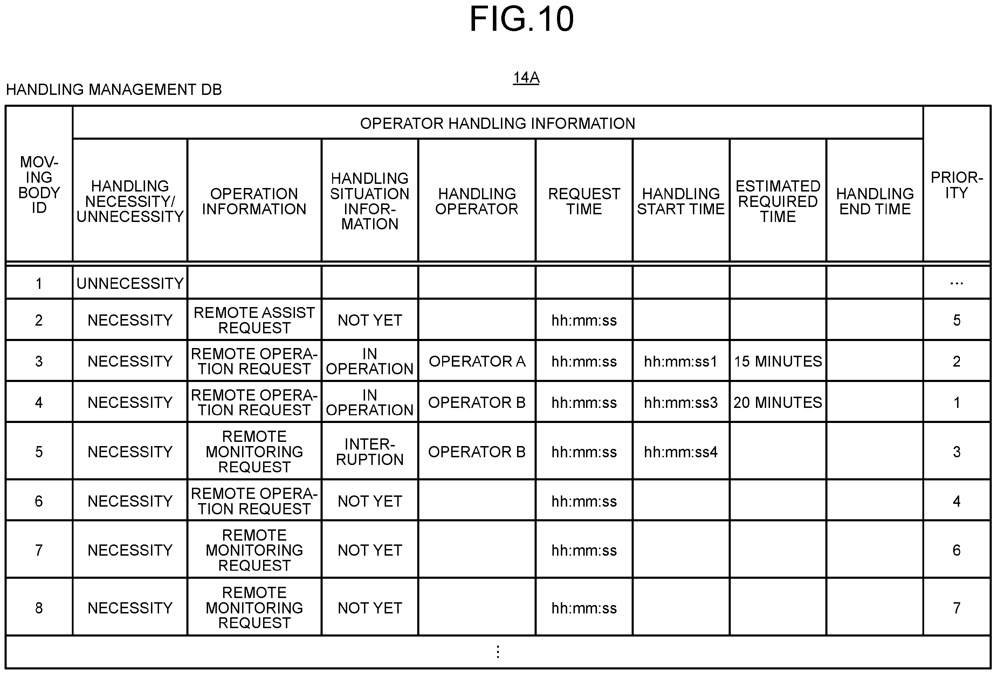

FIG. 10 is a schematic table of an example of the data configuration of the handling management DB 14A. For example, assumed is a case where the handling management DB 14A illustrated in FIG. 10 is stored in the storage unit 14 by the priority determination unit 15B as a state.

In this case, the upload necessity/unnecessity determination unit 15C performs processing similar to the above-described processing to calculate, as the upload criterial number, the total value "4" of the number of moving body IDs "2" belonging to "in operation "as the handling situation information and the number of handling operators "2".

Here, in a case where no estimated required time is considered, the upload necessity/unnecessity determination unit 15C determines upload necessity for four moving bodies 22 corresponding to moving body IDs "3" to "6".

However, for example, assumed is a case where estimated required time is set per remote task. In addition, estimated required time may be set in advance per piece of operation information. Then, based on at least either the remote task or the operation information, the upload necessity/unnecessity determination unit 15C may read the corresponding previously set estimated required time to calculate estimated required time per moving body 22 and register the estimated required time in the handling management DB 14A.

Based on the position of the moving body 22, the type of the moving body 22, and a result of detection from the sensor 22A included in the moving body information received from the moving body system 20 including the moving body 22, and operational information on the moving body 22, the upload necessity/unnecessity determination unit 15C may make an adjustment such that the calculated estimated required time is changed.

The upload necessity/unnecessity determination unit 15C stores an auxiliary start time lag in advance. The auxiliary start time lag is, but not limited to, for example, three minutes. The auxiliary start time lag may be included in the operation information.

Then, the upload necessity/unnecessity determination unit 15C sets, as a new upload criterial number, the number resulting from addition of the number of remote tasks in operation fulfilling the following time condition to the above calculated upload criterial number. That is, the upload necessity/unnecessity determination unit 15C calculates, as a new upload criterial number, the number resulting from further addition of the number of remote tasks to the total value "4" of the number of moving body IDs "2" belonging to "in operation" as the handling situation information and the number of handling operators "2".

The time condition is given by "current time > handling start time + estimated required time - auxiliary start time lag" .

For example, assumed is a case where, for the moving body ID "3", the handling start time is 13 minutes before the current time, the estimated required time is 15 minutes, and the auxiliary start time lag is three minutes. In this case, when the current time corresponds to the time when 12 minutes have passed from the handling start time, a moving body 22 corresponding to the moving body ID "3" fulfills the time condition as a state. Thus, at the timing for the state, the upload necessity/unnecessity determination unit 15C calculates, as a new upload criterial number, "5" that is the number resulting from addition of the number of remote tasks in operation "1" to the upload criterial number "4".

In this case, the moving bodies 22 determined as upload necessity at the timing for the state are five moving bodies 22 of moving bodies 22 corresponding to the moving body IDs "3", "4", "5", and "6" with a moving body 22 corresponding to moving body ID "2" in descending order of priority. Then, the reception control unit 15D receives the first information from each of the moving body systems 20 including one-to-one the moving bodies 22 determined as upload necessity, so that the reception control unit 15D can adjust the timing for receiving the first information from the corresponding moving body system 20.

In the information processing apparatus 10, based on the handling situation information on the moving body 22 by the operator P, the reception control unit 15D may adjust the reception end timing for the first information received from the moving body system 20 including the moving body 22.

For example, the upload necessity/unnecessity determination unit 15C changes the above-described estimated required time in accordance with the handling situation information on the moving body 22 by the operator P. For example, for the predetermined required time corresponding to "in operation" as the handling situation information and the estimated required time corresponding to "completion" as the handling situation information, mutually different times are set in advance. Then, when the estimated required time based on the handling situation information elapses from the beginning of reception of the first information, the reception control unit 15D is required to terminate the reception of the first information.

The upload necessity/unnecessity determination unit 15C may further store in advance information on continuation upload time.

Then, in a case where the handling situation information indicates "completion", the upload necessity/unnecessity determination unit 15C may determine as upload necessity regardless of priority in a case where the relationship "current time < handling completion time + continuation upload time" is fulfilled. Then, the reception control unit 15D receives the first information from the moving body system 20 including the moving body 22 determined as upload necessity. In addition, when the fulfilled relationship terminates, the reception control unit 15D is required to terminate the reception of the first information from the moving body system 20 including the moving body 22.

In this case, during a predetermined time from the handling end time, the reception control unit 15D can continue the reception of the first information from the moving body system 20.

The reception control unit 15D may further adjust the timing for receiving the first information from the moving body system 20 in accordance with the degree of importance of the remote task registered in the queue.

Note that the upload necessity/unnecessity determination unit 15C may determine upload necessity/unnecessity further using information per input from the operator P.

For example, the operator P may operate the input unit 32 of the operator terminal 30 to input, for example, an instruction for uploading or an instruction for captured picture saving. The communication control unit 35A of the operator terminal 30 is required to transmit, to the information processing apparatus 10, the situation information further including such information received, as an input, from the operator P.

The upload necessity/unnecessity determination unit 15C of the information processing apparatus 10 may determine as upload necessity for the moving body 22 for which the instruction for uploading is received. The upload necessity/unnecessity determination unit 15C may control the moving body system 20 such that the captured picture captured by the picture capturing unit 26 of the moving body 22 for which the instruction for captured picture saving is received is saved in the moving body system 20.

Note that, when the upload necessity/unnecessity determination unit 15C determines upload necessity for the moving body 22 for which the instruction for uploading is received, the first information may be received from each of the moving body systems 20 including one-to-one moving bodies 22, the number of which is more than the calculated upload criterial number. Although the number of moving bodies 22 determined as upload necessity at the time when the instruction for uploading is received is not more than the upload criterial number, the upload necessity/unnecessity determination unit 15C adjusts the upload criterial number as above, so that the number of moving bodies 22 determined as upload necessity may exceed the upload criterial number. In this case, the upload necessity/unnecessity determination unit 15C is required to notify the operator terminal 30 of the operator P of information indicating that the number of moving bodies 22 determined as upload necessity is likely to exceed the upload criterial number. The upload necessity/unnecessity determination unit 15C may notify the operator terminal 30 of information indicating the degree of leeway for the upload criterial number, for example, how much more of the first information can be uploaded. The upload necessity/unnecessity determination unit 15C may receive, from the operator P, the selection of a moving body 22 as the target for which the reception of the first information is to be interrupted and determine as upload unnecessity for the moving body 22 for which the selection is received.

For the information processing that the information processing apparatus 10 performs, the operator P may make a setting input.

For example, the operator P operates the input unit 32 of the operator terminal 30 to input first setting information indicating the moving body ID or vehicle type of a moving body 22 as continuous upload necessity. The operator P operates the input unit 32 of the operator terminal 30 to input second setting information indicating the moving body ID or vehicle type of a moving body 22 as continuous upload unnecessity. The communication control unit 35A of the operator terminal 30 transmits, to the information processing apparatus 10, setting information including at least either the received first setting information or second setting information as an input.

In a case where the setting information received from the operator terminal 30 including the first setting information, the upload necessity/unnecessity determination unit 15C of the information processing apparatus 10 determines continuous upload necessity for the moving body 22 identified by the moving body ID or vehicle type of the moving body 22 as continuous upload necessity indicated by the first setting information. In a case where the setting information received from the operator terminal 30 includes the second setting information, the upload necessity/unnecessity determination unit 15C determines continuous upload unnecessity for the moving body 22 identified by the moving body ID or vehicle type of the moving body 22 as continuous upload unnecessity indicated by the second setting information.

Note that the upload necessity/unnecessity determination unit 15C is required to calculate, as a new upload criterial number, a value resulting from subtraction of the number of moving bodies 22 as continuous upload necessity from the calculated upload criterial number and perform processing similar to the above-described processing.

For example, assumed is a case where the information processing apparatus 10 receives the setting information indicating moving body IDs "A" to "C" as continuous upload necessity and moving body IDs "D" to "J" as continuous upload unnecessity. In this case, the upload necessity/unnecessity determination unit 15C determines upload necessity regardless of priority for the moving bodies 22 identified by the moving body IDs "A" to "C". The upload necessity/unnecessity determination unit 15C determines upload unnecessity regardless of priority for the moving bodies 22 identified by the moving body IDs "D" to "J".

Then, using, as a new upload criterial number, a value resulting from subtraction of three moving bodies 22 identified by the moving body IDs "A" to "C" from the upload criterial number, the upload necessity/unnecessity determination unit 15C is required to perform determination processing for upload necessity/unnecessity, similarly to the above.

The upload necessity/unnecessity determination unit 15C may retain the reception start time and reception end time for the first information from the moving body 22 by the reception control unit 15D and determine upload necessity/unnecessity further using the elapsed time from the reception start time to the reception end time. For example, in a case where the elapse is not more than a predetermined time, the upload necessity/unnecessity determination unit 15C keeps a result of previous determination of upload necessity/unnecessity. Due to such processing, frequent instantaneous switches can be inhibited from being made for the presence or absence of transmission of the first information from the moving body system 20 including the moving body 22 to the information processing apparatus 10, enabling control for avoiding chattering. Since such frequent instantaneous switches can be inhibited from being made, an increase can be inhibited in overhead or the captured picture can be inhibited from being divided for transmission to the information processing apparatus 10.

Note that, in the above embodiment, the description has been given with an estimated mode in which the information processing system 1 includes a single information processing apparatus 10. However, the information processing system 1 may have a configuration in which a plurality of information processing apparatuses 10 is provided. In addition, a route for transmitting the first information from a moving body system 20 to the information processing apparatus 10 may include a plurality of routes.

For example, the number of pieces of first information to be transmitted from a plurality of moving body systems 20 to the information processing apparatus 10 in an overlapping period may exceed the upload criterial number or the above-described processing for adjusting the upload criterial number may cause the number of pieces of first information to exceed the upload criterial number. In addition, at least either a route or a base station as a bottle neck to the information processing apparatus 10 may be different between a plurality of moving body systems 20.

Thus, in such a case, the captured picture transmission unit 28D of the moving body system 20 is required to transmit the first information to the information processing apparatus 10 using at least one of an information processing apparatus 10 at least partially different from the others, a route at least partially different from the others, a base station at least partially different from the others, and a frequency band at least partially different from the others, between a plurality of moving body systems 20.

In a case where the moving body system 20 transmits the first information in advance to the information processing apparatus 10 through a plurality of lines, for example, due to network bonding, the moving body system 20 may transmit the first information to the information processing apparatus 10 with a difference in bonding allocation between moving body systems 20.

Note that, for recording or post-verification by the operator P, the captured picture transmission unit 28D of the moving body system 20 may transmit, to the information processing apparatus 10, the captured picture captured by the picture capturing unit 26 due to event occurrence as a trigger. In such a case, the operator P may desire to grasp the state before event occurrence.

Thus, the captured picture transmission unit 28D of the moving body system 20 keeps the latest captured picture over a certain period stored in the storage unit 27 and deletes the captured picture captured before the certain period. Then, in response to occurrence of a previously determined event, the captured picture transmission unit 28D may transmit, to the information processing apparatus 10, the captured picture from the timing of a predetermined time before the occurrence time of the event (e.g., 10 seconds before).

The operator P can not necessarily predict the timing of determination of upload necessity of the first information including the captured picture, and thus such determination may be abruptly made. Thus, the operator P may desire to verify the captured picture before the timing of determination of upload necessity. Thus, the captured picture transmission unit 28D of the moving body system 20 may transmit, to the information processing apparatus 10, the first information including the captured picture from the timing of a predetermined time before the timing at which the upload necessity/unnecessity information indicating upload necessity is received from the information processing apparatus 10.

Next, an example of the hardware configuration of each of the information processing apparatus 10, moving body system 20, and operator terminal 30 according to any of the above embodiment and modifications will be described.

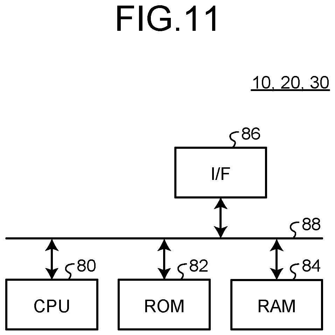

FIG. 11 is a hardware configuration diagram of an example of each of the information processing apparatus 10, moving body system 20, and operator terminal 30 according to any of the above embodiment and modifications.

The information processing apparatus 10, moving body system 20, and operator terminal 30 according to any of the above embodiment and modifications each include a central processing unit (CPU) 80, a read only memory (ROM) 82, a random access memory (RAM) 84, and an I/F 86 that are mutually connected through a bus 88 and thus have a hardware configuration using an ordinary computer.

The CPU 80 serves as an arithmetic device that controls the information processing apparatus 10, moving body system 20, or operator terminal 30 according to any of the above embodiment and modifications. The ROM 82 stores, for example, a program for achieving information processing by the CPU 80. The RAM 84 stores data necessary for various types of processing by the CPU 80. The I/F 86 serves as an interface for transmitting/receiving data that is connected, for example, to a storage unit, an input unit, an output unit, a sensor, and a communication unit.

In each of the information processing apparatus 10, moving body system 20, and operator terminal 30 according to any of the above embodiment and modifications, the CPU 80 reads a program from the ROM 82 onto the RAM 84 and executes the program to achieve the above each functional unit on the computer.

Note that a program for performing the above each piece of processing on each of the information processing apparatus 10, moving body system 20, and operator terminal 30 according to any of the above embodiment and modifications may be stored in a hard disk drive (HDD). Alternatively, the program for performing the above each piece of processing on each of the information processing apparatus 10, moving body system 20, and operator terminal 30 according to any of the above embodiment and modifications may be built in advance in the ROM 82 for provision.

The program for performing the above processing on each of the information processing apparatus 10, moving body system 20, and operator terminal 30 according to any of the above embodiment and modifications may be stored as an installable file or an executable file in a computer-readable storage medium, such as a CD-ROM, a CD-R, a memory card, a digital versatile disk (DVD), or a flexible disk (FD) for provision as a computer program product. The program for performing the above information processing on each of the information processing apparatus 10, moving body system 20, and operator terminal 30 according to any of the above embodiment and modifications may be stored on a computer connected to a network, such as the Internet, such that the program can be provided by downloading through the network. The program for performing the above information processing on each of the information processing apparatus 10, moving body system 20, and operator terminal 30 according to any of the above embodiment and modifications may be provided or distributed through a network, such as the Internet.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

Note that the present technique can have the following configurations.
(1) An information processing method performed by an information processing apparatus, the information processing method including
   receiving first information from a moving body, based on operation information regarding an operator who monitors the moving body.
(2) The information processing method according to (1), further including:
   specifying, based on moving body information regarding a traveling environment of the moving body, the operation information regarding necessity of operation by the operator for each moving body; and
   determining, based on the operation information, priority for each moving body, wherein
   at the receiving, the first information is received from the moving body selected in accordance with the priority.
(3) The information processing method according to (1) or (2), wherein
   the first information includes a captured picture captured at the moving body.
(4) The information processing method according to any one of (1) to (3), further including
   outputting the first information to an operator terminal used by the operator.
(5) The information processing method according to any one of (2) to (4), wherein
   the operation information indicates at least one of a remote operation request indicating necessity of remote operation by the operator to the moving body, remote assist request indicating necessity of assistive remote operation by the operator to the moving body, and a remote monitoring request indicating necessity of monitoring of the moving body by the operator.
(6) The information processing method according to any one of (2) to (5), wherein
   at the determining of the priority, the priority is determined for each moving body, based on the operation information and handling situation information on a remote task to the moving body by the operator.
(7) The information processing method according to any one of (2) to (5), further including
   determining, based on the priority, whether upload of the first information is necessary for each moving body, wherein
   at the receiving, the first information is received from the moving body for which the upload is determined to be necessary.
(8) The information processing method according to (7), wherein
   at the determining of whether the upload is necessary, whether the upload of the first information is necessary is determined for each moving body, based on the priority and handling situation information on a remote task to the moving body by the operator.
(9) The information processing method according to (7) or (8), wherein
   at the determining of whether the upload is necessary,
   an upload criterial number is calculated based on handling situation information on a remote task to the moving body by the operator; and
   it is determined that the upload of the first information is necessary for the upload criterial number of moving bodies in descending order of priorities, based on the handling situation information.
(10) The information processing method according to any one of (7) to (9), wherein
   at the determining of whether the upload is necessary, whether the upload of the first information is necessary is determined for each picture capturing unit mounted on the moving body.
(11) The information processing method according to any one of (7) to (10), wherein
   at the receiving, the first information is received from the moving body for which the upload is determined to be necessary, and
   the first information is output to an operator terminal in accordance with processing situation information on the operator.
(12) The information processing method according to any one of (7) to (11), wherein
   at the determining of whether the upload is necessary, for each of a plurality of groups into which a plurality of moving bodies to be managed is divided, whether the upload for each moving body belonging to the corresponding group is necessary is determined.
(13) The information processing method according to any one of (7) to (12), wherein
   at the receiving, the first information is received from a predetermined number of moving bodies according to processing situation information on the operator in descending order of priorities, from among moving bodies for which the upload is determined to be necessary; and
   the first information is output to an operator terminal in accordance with the processing situation information on the operator.
(14) The information processing method according to any one of (7) to (13), wherein
   at the receiving, the first information is received from a predetermined number of moving bodies according to a number of operators, in descending order of priorities, from among moving bodies for which the upload is determined to be necessary; and
   the first information is output to an operator terminal in accordance with processing situation information on the operators.
(15) The information processing method according to any one of (1) to (14), wherein
   at the receiving, the first information is received from the moving body continuously even after completion of a remote task to the moving body by the operator, in accordance with environment information on the moving body.
(16) The information processing method according to any one of (1) to (15), wherein
   at the receiving, timing for receiving the first information from the moving body is adjusted based on at least either handling situation information on a remote task to the moving body by the operator or handling start time of the remote task.
(17) An information processing program causing a computer to perform
   receiving first information from a moving body, based on operation information regarding an operator who monitors the moving body.
(19) An information processing apparatus including
   a transmission unit configured to transmit, to an external apparatus, first information including a captured picture captured by a picture capturing unit mounted on a moving body, based on upload necessity/unnecessity information indicating whether upload is necessary determined for each moving body in accordance with priority determined for each moving body based on operation information regarding an operator who monitors the moving body.

## Claims

1. An information processing method performed by an information processing apparatus, the information processing method comprising
receiving first information from a moving body, based on operation information regarding an operator who monitors the moving body.

2. The information processing method according to claim 1, further comprising:
specifying, based on moving body information regarding a traveling environment of the moving body, the operation information regarding necessity of operation by the operator for each moving body; and
determining, based on the operation information, priority for each moving body, wherein
at the receiving, the first information is received from the moving body selected in accordance with the priority.

3. The information processing method according to claim 1, wherein
the first information includes a captured picture captured at the moving body.

4. The information processing method according to claim 1, further comprising
outputting the first information to an operator terminal used by the operator.

5. The information processing method according to claim 2, wherein
the operation information indicates at least one of a remote operation request indicating necessity of remote operation by the operator to the moving body, remote assist request indicating necessity of assistive remote operation by the operator to the moving body, and a remote monitoring request indicating necessity of monitoring of the moving body by the operator.

6. The information processing method according to claim 2, wherein
at the determining of the priority, the priority is determined for each moving body, based on the operation information and handling situation information on a remote task to the moving body by the operator.

7. The information processing method according to claim 2, further comprising
determining, based on the priority, whether upload of the first information is necessary for each moving body, wherein
at the receiving, the first information is received from the moving body for which the upload is determined to be necessary.

8. The information processing method according to claim 7, wherein
at the determining of whether the upload is necessary, whether the upload of the first information is necessary is determined for each moving body, based on the priority and handling situation information on a remote task to the moving body by the operator.

9. The information processing method according to claim 7, wherein
at the determining of whether the upload is necessary,
an upload criterial number is calculated based on handling situation information on a remote task to the moving body by the operator; and
it is determined that the upload of the first information is necessary for the upload criterial number of moving bodies in descending order of priorities, based on the handling situation information.

10. The information processing method according to claim 7, wherein
at the determining of whether the upload is necessary, whether the upload of the first information is necessary is determined for each picture capturing unit mounted on the moving body.

11. The information processing method according to claim 7, wherein
at the receiving, the first information is received from the moving body for which the upload is determined to be necessary, and
the first information is output to an operator terminal in accordance with processing situation information on the operator.

12. The information processing method according to claim 7, wherein
at the determining of whether the upload is necessary, for each of a plurality of groups into which a plurality of moving bodies to be managed is divided, whether the upload for each moving body belonging to the corresponding group is necessary is determined.

13. The information processing method according to claim 7, wherein
at the receiving, the first information is received from a predetermined number of moving bodies according to processing situation information on the operator in descending order of priorities, from among moving bodies for which the upload is determined to be necessary; and
the first information is output to an operator terminal in accordance with the processing situation information on the operator.

14. An information processing program causing a computer to perform
receiving first information from a moving body, based on operation information regarding an operator who monitors the moving body.

15. An information processing apparatus comprising
a transmission unit configured to transmit, to an external apparatus, first information including a captured picture captured by a picture capturing unit mounted on a moving body, based on upload necessity/unnecessity information indicating whether upload is necessary determined for each moving body in accordance with priority determined for each moving body based on operation information regarding an operator who monitors the moving body.
